# FASCICULE DE BREVET EUROPEEN

(11) **EP 3 532 286 B1**
(45) Date de publication et mention de la délivrance du brevet: **09.12.2020**
(21) Numéro de dépôt: 17804224.8
(22) Date de dépôt: 24.10.2017
(51) Int. Cl.: B32B 17/10, C03C 27/12, F21V 33/00, B60K 35/00

(54) **VITRAGE LUMINEUX DE VÉHICULE, VÉHICULE L'INCORPORANT**
LEUCHTENDE FAHRZEUGVERGLASUNG, DIESE UMFASSENDES FAHRZEUG
LUMINOUS VEHICULAR GLAZING, VEHICLE COMPRISING THE SAME

(30) Priorité: 28.10.2016 FR 1660533
(43) Date de publication de la demande: 04.09.2019
(73) Titulaire: SAINT-GOBAIN GLASS FRANCE, 92400 Courbevoie (FR)
(72) Inventeur: BAUERLE, Pascal, 80700 Roye (FR); GILLESSEN, Stephan, 52477 Alsdorf (DE); STRICHER, Arthur, 60280 Margny les Compiegne (FR)
(74) Mandataire: Saint-Gobain Recherche
(86) Numéro de dépôt international: PCT/FR2017/052934
(87) Numéro de publication internationale: WO 2018/078278

(56) Documents cités:
- WO-A1-2016/079459
- DE-A1-102013 003 686
- DE-B3-102005 024 857
- US-A1- 2005 238 857

## Description

L'invention concerne un vitrage lumineux de véhicule ainsi qu'un véhicule comportant un tel vitrage.

L'intégration d'éclairage décoratif, fonctionnel et de signalisation dans les vitrages de véhicule est de plus en plus recherchée.

La demande de brevet WO2016/079459 propose dans une mode de réalisation en relation avec sa figure 4 un pare-brise feuilleté bombé avec une rangée des diodes électroluminescentes inorganiques (DEL ou LED en anglais) sur une carte de circuit imprimé (PCB en anglais) en forme de L c'est-à-dire avec une partie rectangulaire qui est la zone à diodes et un retour qui est une partie étroite avec des pistes électriques, sortant de la tranche du pare-brise.

Toutefois, des défauts d'assemblage sont constatés.

La demande de brevet a donc pour objet un vitrage feuilleté bombé lumineux de véhicule à DEL qui soit plus fiable, réduisant le taux de rebut.

A cet effet, la présente demande a pour premier objet un vitrage lumineux de véhicule à lumière interne, notamment pare-brise (vitrage frontal) ou vitrage latéral ou encore toit, comprenant :
- un vitrage feuilleté bombé comportant :
   - un premier vitrage (bombé), qui est une feuille de verre (de préférence à coins, notamment quadrilatère, rectangulaire) ou formant vitrage extérieur, -en verre minéral, éventuellement clair, extraclair ou même teinté notamment gris ou vert-avec des première et deuxième faces principales respectivement dites face F1 et face F2, et une première tranche, premier vitrage notamment d'épaisseur E1 qui est de préférence pour un vitrage automobile d'au plus 2,5mm, même d'au plus 2,2mm - notamment de 1,9mm, 1,8mm, 1,6mm ou encore 1,4mm- ou même d'au plus 1,3mm ou d'au plus 1mm
   - un deuxième vitrage (bombé), qui est une feuille de verre (de préférence à coins, notamment quadrilatère, rectangulaire) formant vitrage intérieur,- en verre minéral de préférence clair ou extraclair voire teinté- avec des troisième et quatrième faces principales respectivement face F3 et face F4, et une deuxième tranche du côté de la première tranche éventuellement en retrait de la première tranche notamment d'au plus 2mm ou même d'au plus 1mm, deuxième vitrage notamment d'épaisseur E'1 qui pour un vitrage automobile est de préférence inférieure à celle du premier vitrage, même d'au plus 2,2mm - notamment 1,9mm, 1,8mm, 1,6mm et 1,4mm- ou même d'au plus 1,3mm ou d'au plus 1mm, l'épaisseur totale des premier et deuxième vitrages étant de préférence strictement inférieure à 4mm, même à 3,7mm (pour un vitrage de véhicule automobile)
   - entre la face F2 et la face F3 qui sont les faces internes du vitrage feuilleté, un intercalaire de feuilletage, éventuellement clair, extraclair voire teinté notamment gris ou vert, en matière polymérique thermoplastique et mieux encore en polyvinylbutyral (PVB), notamment d'épaisseur E2 qui est de préférence pour un vitrage automobile d'au plus 1,8mm, mieux d'au plus 1,2mm et même d'au plus 0,9mm (et mieux d'au moins 0,3mm et même d'au moins 0,5mm), notamment en retrait du chant du premier vitrage par exemple d'au plus 2mm ou d'au plus 1mm et/ou en retrait du chant du deuxième vitrage par exemple d'au plus 4mm ou d'au plus 3mm, intercalaire de feuilletage ayant une face principale F'2 en contact adhésif avec la face F2 (face étain ou autre face, si verre flotté) -nue ou avec un revêtement- et une face principale F'3 en contact adhésif avec la face F3 (face étain ou autre si verre flotté) -nue ou avec un revêtement-
- entre les faces F2 et F3, des diodes électroluminescentes inorganiques, chaque diode ayant une face émettrice de lumière en regard de la face F3 apte à émettre une lumière (monochromatique, ou polychromatique) en direction de la face F3, chaque diode étant de préférence d'épaisseur E4 de préférence submillimétrique et mieux d'au moins 0,2mm
- un support des diodes ayant une face principale dite face avant en regard de la face F3 et une face principale dite face arrière en regard de la face F2, les diodes étant montées sur la face avant, le support des diodes étant flexible, en particulier polymérique, d'épaisseur E3 submillimétrique et mieux d'au plus 0,2mm et même d'au plus 0,1mm, le support des diodes comportant sur la face avant des zones électroconductrices d'alimentation électrique, dites pistes électriques, une partie ou toutes les pistes électriques alimentant les diodes.

Le support des diodes comporte :
- entre les faces F2 et F3, une zone dite à diodes (définissant la zone lumineuse interne vue côté face F4) comportant lesdites diodes, le long de la première tranche, de longueur L0 le long de la première tranche (L0 par exemple prise parallèlement à la première tranche) d'au moins 6cm et même d'au moins 10cm et même d'au moins 15cm , -en bande ou en une autre forme (géométrique :rond, triangle etc, formant un symbole ou un pictogramme...)- et notamment de largeur W0 (normale à L0) inférieure ou égale à L0 de préférence d'au plus 5cm et même d'au plus 4cm,
- une zone d'alimentation électrique débouchante, prolongeant la zone à diodes, s'étendant en direction de la première tranche et débouchant de l'autre tranche, comportant une zone d'alimentation dite zone interne entre les faces F2 et F3 définie par une largeur Wt inférieure à L0 (Wt par exemple prise parallèlement à la première tranche et/ou à L0), zone interne prolongée par une zone d'alimentation au-delà de l'autre tranche dite zone dépassante.

L'intercalaire de feuilletage est présent entre la face avant et la face F3 et est éventuellement entre les diodes et la face F3.

Le vitrage feuilleté bombé selon l'invention comporte en outre un adhésif étanche à l'eau liquide -voire même au moment d'une injection pour faire une encapsulation polymérique, étanche à une composition liquide polymérique telle que le polyuréthane-, de préférence en forme de bande, positionné entre la face F2 et la face arrière dans une partie de la face arrière (laissant une surface de la face arrière contre la face F2), d'épaisseur E8 submillimétrique de préférence d'au plus 0,2mm, mieux d'au plus 0,1mm et mieux d'au plus 0,05mm notamment E3+E8 est de préférence d'au plus 0,15mm, de préférence une bande adhésive double face (plutôt qu'une colle).

Selon l'invention, la largeur totale Wt est d'au moins 5cm, la zone débouchante est divisée en une pluralité de bandes dites à pistes porteuses des pistes électriques (de préférence toutes ou au moins pour la majorité sont porteuses de pistes électriques pour les diodes et/ou pour d'autres composants sur la face avant) de largeur individuelle Wi inférieure à 5cm dans la zone interne et de préférence d'au moins 5mm et même d'au moins 1cm, bandes débouchantes de l'autre tranche (dans la zone dépassante).

Et selon l'invention, l'intercalaire de feuilletage est présent dans l'espace dit interbande entre bandes à pistes voisines, notamment de largeur W_{E} d'au moins 5mm et mieux d'au moins 1cm et mieux d'au plus 20cm et même d'au plus 10cm.

De manière similaire, la présente demande a pour deuxième objet un vitrage de véhicule à signalisation lumineuse externe, notamment vitrage latéral ou lunette arrière voire pare-brise (vitrage frontal), comprenant :
- un vitrage feuilleté bombé comportant :
   - un premier vitrage (bombé), qui est une feuille de verre (de préférence à coins, notamment quadrilatère, rectangulaire) ou formant vitrage extérieur, -en verre minéral, éventuellement clair, extraclair ou teinté notamment gris ou vert- avec des première et deuxième faces principales respectivement dites face F1 et face F2, et une première tranche, vitrage notamment d'épaisseur E1 qui est de préférence pour un vitrage automobile d'au plus 2,5mm, même d'au plus 2,2mm
   - notamment de 1,9mm, 1,8mm, 1,6mm ou encore 1,4mm- ou même d'au plus 1,3mm ou d'au plus 1mm
- un deuxième vitrage (bombé), qui est une feuille de verre (de préférence à coins, notamment quadrilatère, rectangulaire) formant vitrage intérieur,- en verre minéral de préférence clair ou extraclair voire teinté- avec des troisième et quatrième faces principales respectivement face F3 et face F4, et une deuxième tranche du côté de la première tranche éventuellement en retrait de la première tranche notamment d'au plus 2mm ou même d'au plus 1mm, vitrage notamment d'épaisseur E'1 qui pour un vitrage automobile est de préférence inférieure à celle du premier vitrage, même d'au plus 2,2mm - notamment 1,9mm, 1,8mm, 1,6mm et 1,4mm- ou même d'au plus 1,3mm ou d'au plus 1mm, l'épaisseur totale des premier et deuxième vitrages étant de préférence strictement inférieure à 4mm, même à 3,7mm (pour un vitrage de véhicule automobile)
- entre la face F2 et la face F3 qui sont les faces internes du vitrage feuilleté, un intercalaire de feuilletage, éventuellement clair, extraclair voire teinté notamment gris ou vert, en matière polymérique thermoplastique et mieux encore en polyvinylbutyral (PVB), notamment d'épaisseur E2 qui est de préférence pour un vitrage automobile d'au plus 1,8mm, mieux d'au plus 1,2mm et même d'au plus 0,9mm (et mieux d'au moins 0,3mm et même d'au moins 0,5mm), notamment en retrait du chant du premier vitrage par exemple d'au plus 2mm ou d'au plus 1mm et/ou en retrait du chant du deuxième vitrage par exemple d'au plus 4mm ou d'au plus 3mm, intercalaire de feuilletage ayant une face principale F'2 en contact adhésif avec la face F2 (face étain ou autre face, si verre flotté) -nue ou avec un revêtement- et une face principale F'3 en contact adhésif avec la face F3 (face étain ou autre face, si verre flotté) nue ou avec un revêtement-
- entre les faces F2 et F3, des diodes électroluminescentes inorganiques, chaque diode ayant une face émettrice de lumière en regard de la face F2 apte à émettre une lumière (monochromatique, ou polychromatique) en direction de la face F2, chaque diode étant de préférence d'épaisseur E4 de préférence submillimétrique et mieux d'au moins 0,2mm
- un support des diodes, ayant une face principale dite avant en regard de la face F2 et une face principale dite arrière en regard de la face F3, les diodes étant montées sur la face avant, le support des diodes étant flexible, en particulier polymérique, d'épaisseur E3 submillimétrique et mieux d'au plus 0,2mm et même d'au plus 0,1mm, le support des diodes comportant sur la face avant des zones électroconductrices d'alimentation électrique, dites pistes électriques, une partie ou toutes les pistes électriques alimentant les diodes.

Le support des diodes comporte :
- entre les faces F2 et F3, une zone dite à diodes (définissant la zone lumineuse vue côté face F1) comportant lesdites diodes, le long de la deuxième tranche, de longueur L0 le long de la deuxième tranche (par exemple prise parallèlement à la deuxième tranche) d'au moins 6cm et même d'au moins 10cm et même d'au moins 15cm , en bande ou en toute autre forme géométrique :rond, triangle etc, formant un symbole ou un pictogramme...) et notamment de largeur W0 (normale à L0) inférieure ou égale à L0 de préférence d'au plus 5cm et même d'au plus 4cm
- une zone d'alimentation débouchante, prolongeant la zone à diodes et s'étendant en direction de la deuxième tranche et débouchant de l'autre tranche, comportant une zone d'alimentation dite zone interne entre les faces F2 et F3 définie par une largeur Wt inférieure à L0 (par exemple prise parallèlement à la deuxième tranche et/ou à L0), zone interne prolongée par une zone d'alimentation au-delà de l'autre tranche dite zone dépassante.

L'intercalaire de feuilletage est présent entre la face avant et la face F2 et est éventuellement entre les diodes et la face F2.

Le vitrage lumineux comporte en outre une adhésif étanche à l'eau liquide -voire même au moment d'une injection pour faire une encapsulation polymérique, étanche à une composition liquide polymérique telle que le polyuréthane-, de préférence en forme de bande, positionné entre la face arrière et la face F3, dans une partie de la face arrière (laissant une surface de la face arrière contre la face F3), d'épaisseur E8 submillimétrique de préférence d'au plus 0,2mm, mieux d'au plus 0,1mm et mieux d'au plus 0,05mm - notamment E3+E8 est de préférence d'au plus 0,15mm mieux d'au plus 0,1mm.

Selon l'invention, enfin, la largeur totale Wt est d'au moins 5cm, la zone débouchante est divisée en une pluralité de bandes dites à pistes porteuses de pistes électriques (de préférence toutes ou au moins pour la majorité sont porteuses de pistes électriques, pour les diodes et/ou pour d'autres composants sur la face avant) de largeur individuelle Wi inférieure à 5cm dans la zone interne et de préférence d'au moins 5mm mieux d'au moins 1cm, bandes à pistes débouchantes de l'autre tranche (dans la zone dépassante).

Et selon l'invention, l'intercalaire de feuilletage est présent dans l'espace dit interbande entre bandes à pistes voisines notamment de largeur W_{E} d'au moins 5mm et mieux d'au moins 1cm et même d'au plus 20cm et même d'au plus 10cm.

Lorsqu'il n'y a que peu de diodes et autres composants électriques et/ou que les diodes intégrées sont monochromatiques, la zone interne comprend par conséquence peu de pistes, et peut être relativement étroite typiquement de 2cm comme décrit dans l'art antérieur.

Toutefois, en considérant l'intégration d'un grand nombre de diodes et/ou des diodes polychromatiques et même d'autres composants électriques (d'épaisseur E7 submillimétrique si dans la zone à diodes ou la zone interne), comme des micro-contrôleurs électriques, ou d'autres éléments résistifs ou capacitifs, le nombre de pistes augmentent donc et amène naturellement à une largeur plus importante, au-dessus de 5cm.

Si on choisit d'élargir la partie interne au-delà de 5cm, la Demanderesse a constaté que des problèmes surviennent :
- pour suivre la courbure du vitrage bombé, le rayon de courbure du pare-brise est par exemple compris entre 2 et 12m, le support des diodes qui est au départ une feuille plate, forme des plis et donc faire apparaître des défauts d'aspect
- l'augmentation de la largeur de la surface entre la face arrière et la face F2 (respectivement F3 pour le deuxième objet) qui est sans adhésif, entraine l'affaiblissement mécanique du vitrage feuilleté bombé sur toute sa surface, et donc une fragilité locale,
- l'augmentation de la largeur de la surface entre la face arrière et la face F2 (respectivement F3 pour le deuxième objet) qui est sans adhésif, peut générer des bulles d'air qui avec le vieillissement peuvent remonter dans l'intercalaire de feuilletage et générer des défauts d'aspects
- l'augmentation de la largeur de la surface entre la face arrière et la face F2 (respectivement F3 pour le deuxième objet) qui est sans adhésif, peut permettre l'infiltration d'eau ainsi détériorer les diodes et/ou tout composant électrique présent dans le vitrage.

Pour contrecarrer ces problèmes, la présente invention propose ainsi de diviser la partie interne du support de diodes (tel que PCB) en plusieurs zones étroites (bandes), apportant une plus grande liberté de conformation au support de diodes (PCB), qui est alors plus à même de suivre la courbure du vitrage feuilleté bombé.

Le support des diodes (type PCB) selon l'invention contient des pistes électriques permettant l'alimentation d'un grand nombre diodes voire d'autres composants électriques dans la zone interne et même hors du feuilletage.

La zone interne reste de préférence une zone de rétrécissement du support à diodes. La zone à diodes et la zone interne (et même la zone à diodes et l'ensemble de la zone débouchante) peut avoir une forme générale en U (deux bandes à pistes), en peigne (plus de deux bandes à pistes). La zone interne en une pluralité de bandes à pistes peut s'étendre sur toute la longueur L0 avec des bandes à intervalles réguliers ou non, ou encore prolonger une portion de de la zone à diodes, par exemple une portion centrale (donnant un support à diodes de forme générale en T).

On peut souhaiter limiter autant que possible le nombre de bandes pour une manipulation plus aisée, la rapidité d'assemblage et même les espacer le moins possible et pour la discrétion ou pour faciliter la connexion à la source d'alimentation électrique.

Avantageusement, l'espace dit interbande entre deux bandes à pistes voisines est de largeur W_{E} d'au moins 5mm et même d'au plus 20cm. W_{E} peut être constant. W_{E} peut être identique pour tous les espaces interbandes le long de la première tranche (resp. deuxième tranche pour le deuxième objet).

Pour le premier objet, le support à diodes peut avoir une extension en direction d'une tranche adjacente de la première tranche. Il peut y avoir ainsi une deuxième zone à diodes le long de la tranche adjacente avec des deuxièmes bandes à pistes comme celles déjà décrites.

Pour le deuxième objet, le support à diodes peut avoir une extension en direction d'une tranche adjacente de la deuxième tranche. Il peut y avoir ainsi une deuxième zone à diodes le long de la tranche adjacente avec des deuxièmes bandes à pistes comme celles déjà décrites.

L'intercalaire de feuilletage quant à lui peut être formé à partir d'un ou plusieurs films, ayant par exemple une épaisseur entre 0,2mm et 1,1mm.

L'intercalaire de feuilletage peut être choisi parmi le polyvinylbutyral (PVB), éthylène - acétate de vinyle (EVA), polyuréthane (PU) ou résine ionomère, seuls ou en mélanges de plusieurs variétés de l'un d'eux et/ou de plusieurs d'entre eux ; le terme « variétés » fait ici référence à des variations du taux de plastifiant, de ramifications/linéarité, masse moléculaire moyenne des molécules.

On peut préférer utiliser une unique feuille (de PVB) pour l'intercalaire pour des raisons économiques (cout matière et simplement une série de découpes locales à faire).

En particulier, dans un mode de réalisation, l'intercalaire de feuilletage est formé à partir d'un feuillet unique (clair, extraclair voir teinté). L'usage d'une seule feuille (de PVB) de préférence d'épaisseur standard de 0,6 à 0,9mm (pour davantage de sécurité plutôt que 0,38 mm environ) est rendue possible par le choix de nouvelles diodes de puissance ultraminces, submillimétriques, très récemment disponibles sur le marché.

L'intercalaire PVB est éventuellement acoustique et/ou teinté ou préassemblé premier feuillet PVB/ film plastique transparent fonctionnel comme un film de poly téréphtalate d'éthylène dénommé PET fonctionnel (de préférence avec une couche fonctionnelle par exemple électroconductrice)/ deuxième feuillet PVB, le deuxième feuillet éventuel est clair ou extraclair

Le film plastique transparent peut être d'une épaisseur comprise entre 10 et 100 µm. Le film plastique transparent peut être en polyamide, polyester, polyolefine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M®, mais aussi de nombreux autres films (par exemple en PC, PE, PEN, PMMA, PVC), qui sont visuellement aussi transparents que possible et ne se modifient pas dans l'autoclave en ce qui concerne leur surface et leur consistance.

L'intercalaire PVB acoustique peut comprendre au moins une couche dite centrale en matériau plastique viscoélastique aux propriétés d'amortissement vibro-acoustique notamment à base de polyvinylbutyral (PVB) et de plastifiant, et comprenant en outre deux couches externes en PVB standard, la couche centrale étant entre les deux couches externes.

Eventuellement l'une ou les deux couches externes a une section transversale diminuant en forme en coin du haut vers le bas du vitrage feuilleté, la couche en matériau plastique viscoélastique aux propriétés d'amortissement vibro-acoustique ayant une section transversale constante du haut vers le bas du vitrage feuilleté. Comme exemple de feuillet acoustique on peut citer le brevet EP0844075.

L'intercalaire PVB peut être en coin donc avec une section transversale diminuant en forme en coin du haut vers le bas du vitrage feuilleté pour éviter une double image dans le cas d'un affichage tête haute (HUD en anglais), tout particulièrement pour un pare-brise.

Avant le feuilletage, l'intercalaire de feuilletage, de préférence en PVB, peut avoir des trous borgnes ou traversants logeant les diodes. Dans le vitrage feuilleté bombé, l'intercalaire de feuilletage peuvent avoir encore les trous traversants (de largeur identique ou réduite) peuvent ou encore, avec le fluage, l'intercalaire de feuilletage peut remplir l'espace entre diodes et la face concernée (F3 pour le premier objet ou F2 pour le deuxième objet). Avant le feuilletage, l'ouverture borgne ou traversante est de préférence de largeur (et longueur) d'au plus 20mm et même d'au plus 15mm et même d'au plus 10mm ou 5mm ceci en fonction de la largeur des diodes qui se miniaturisent progressivement.

Les ouvertures borgnes ou traversantes peuvent être dans un PVB éventuellement acoustique et/ou en coin, notamment en coin pour un pare-brise, ou encore dans un élément composite PVB/film plastique/PVB.

Dans le vitrage feuilleté bombé, une ouverture borgne ou traversante est de préférence de largeur (et longueur) d'au plus 20mm et même d'au plus 15mm et même d'au plus 10mm ou 5mm ceci en fonction de la largeur des diodes qui se miniaturisent progressivement.

Par exemple, on peut utiliser un PVB de variété à relativement haut fluage, ou un PVB de variété acoustique, notamment de 0,8 mm d'épaisseur environ commercialisé par la Société Eastman sous la marque enregistrée Saflex®, ou même de 0,5 mm d'épaisseur environ commercialisé par la Société Sekisui sous la marque enregistrée S-LEC®.

L'intercalaire de feuilletage (notamment avec trous borgnes ou traversants) peut être en surépaisseur la plus faible possible (par rapport aux diodes) pour ne pas risquer de générer trop de bulles d'air.

Pour le vitrage de véhicule à zone lumineuse interne, la distance H entre la face émettrice des diodes et la face F3 est de préférence non nulle (pour éviter d'endommager les diodes) et de préférence d'au plus 0,5mm et même allant de 0,1 à 0,3mm. Et l'intercalaire de feuilletage est éventuellement entre les diodes (les faces émettrices) et la face F3 sur une épaisseur Er de préférence non nulle et d'au plus 0,5mm et même allant de 0,1 à 0,3mm.

De manière similaire, pour le vitrage de véhicule à signalisation lumineuse externe, la distance H entre la face émettrice des diodes et la face F2 est de préférence non nulle et de préférence d'au plus 0,5mm et même allant de 0,1 à 0,3mm et l'intercalaire de feuilletage est éventuellement entre les diodes (les faces émettrices) et la face F2 sur une épaisseur Er de préférence non nulle et d'au plus 0,5mm et même allant de 0,1 à 0,3mm.

De préférence, notamment un pare-brise de véhicule automobile :
- l'intercalaire de feuilletage est en en poly(vinyl butyral) (PVB) avec une épaisseur E2 d'au plus 0,9mm,
- les diodes sont d'épaisseur E4 inférieure à E2 de préférence d'au plus 0,8mm et même d'au plus 0,5mm
- le support des diodes est d'épaisseur E3 d'au plus 0,1mm et même d'au plus 0,05mm
- et même les premier et deuxième vitrages sont d'épaisseurs E1 et E2 d'au plus 2,1mm.

Concernant les bandes à pistes, la largeur Wi peut être identique ou adaptée en fonction de la répartition des diodes et/ou autre(s) composant(s) (opto)électronique(s) dans la zone à diodes et/ou même dans la zone interne de connexion.

Par simplicité, on peut prévoir l'une au moins des caractéristiques suivantes :
- les bandes à pistes peuvent être dans la zone dépassante avec la même largeur que la largeur Wi,
- les bandes à pistes sont dans la zone dépassante de longueur d'au moins 5cm et mieux d'au moins 10cm ou 20cm
- les bandes à pistes sont dans la zone dépassante reliées (au moins deux à deux) sur une largeur D d'au moins 0,5cm et même d'au moins 1cm (pour une aide à l'assemblage, à la mise en position) et mieux d'au plus 5cm puis de préférence redéployées en (autant de) bandes en direction de la partie terminale (liée à un connecteur) notamment autant de bandes que dans la zone interne,
- les bandes à pistes sont de forme rectangulaire,
- les bandes à pistes sont rectilignes au moins dans la zone interne- la tranche de la zone à diodes définit des zones dite de liaison entre bandes à pistes voisines (côté première tranche ou respectivement deuxième tranche) rectiligne ou en arc, ou encore comporte un chanfrein ou un congé -sur les arrêtes consécutives-, ceci afin de limiter les risques de déchirures,
- les bandes à pistes sont parallèles entre elles à ±5° et/ou sont normales à la première tranche (respectivement la deuxième tranche pour le deuxième objet) à ±5°,
- dans une ou toutes les bandes à pistes, la distance entre la tranche du support des diodes et la piste électrique la plus proche est inférieure à 1cm et même à 0,5cm.

Pour le premier objet, l'adhésif étanche à l'eau liquide, de préférence bande adhésive double face peut être de longueur L8 (parallèle à L0, à la première tranche) au moins égale à Wt et même dépassant de part et d'autre des bandes à pistes notamment d'au moins 1mm et même d'au plus 5mm. La largeur W8 (normale à la première tranche) est de préférence d'au moins 1mm.

Pour le premier objet, la face arrière et la face F2 sont espacées (ne sont pas en contact direct) dans la zone allant depuis la première tranche et jusqu'à la tranche la plus externe dudit adhésif, notamment l'adhésif dépasse de la face arrière adhésive en direction la première tranche. De préférence, l'adhésif étanche à l'eau liquide, de préférence bande adhésive double face, est présent sur la face F2 au-delà de l'autre tranche.

Pour le deuxième objet, l'adhésif étanche à l'eau liquide, de préférence bande adhésive double face peut être de longueur L8 (parallèle à L0, à la deuxième tranche) au moins égale à Wt et même dépassant de part et d'autre des bandes à pistes notamment d'au moins 1mm et même d'au plus 5mm. La largeur W8 (normale à la deuxième tranche) est d'au moins 1mm.

Pour le deuxième objet, de préférence la face arrière et la face F3 sont espacées (ne sont pas en contact direct) dans la zone allant depuis la deuxième tranche et jusqu'à la tranche la plus externe dudit l'adhésif d'étanchéité, de préférence bande adhésive double face, notamment l'adhésif d'étanchéité dépasse de la face arrière adhésive en direction la deuxième tranche. De préférence, l'adhésif étanche à l'eau liquide, de préférence bande adhésive double face, est présent sur la face F3 au-delà de l'autre tranche.

Par simplicité, ledit adhésif étanche à l'eau liquide peut être une unique bande adhésive double face qui s'étend sur au moins la largeur Wt c'est-à-dire sur les bandes à pistes et entre les bandes à pistes (et même dépassant des deux côtés les plus externes).

De préférence afin de mieux garantir l'étanchéité, ledit adhésif étanche à l'eau liquide peut être un ensemble de bandes adhésives double face individuelles, espacées entre elles, chaque bande à piste ayant une bande adhésive individuelle.

En outre, on souhaite bien positionner la zone à diodes. Aussi de préférence, la face avant comporte une ou plusieurs bandes adhésives double face, dite bandes d'alignement, décalée des (faces émettrices) des diodes et même de préférence décalées dudit adhésif étanche à l'eau liquide, d'épaisseur E'8 submillimétrique, mieux d'au plus 0,2mm et même d'au plus 0,1mm ou d'au plus 0,05mm et mieux avec E3+E'8 est de préférence d'au plus 0,15mm mieux d'au plus 0,1mm en contact avec l'intercalaire de feuilletage, -en contact avec la face F'2 de l'intercalaire de feuilletage pour le vitrage à zone lumineuse interne ou avec la face F'3 de l'intercalaire de feuilletage pour le vitrage à signalisation extérieure-.

En particulier, la ou les bandes d'alignement (par exemple transparentes si non masquées) sont dans la zone à diodes, par exemple deux bandes de part et d'autre de la ou des rangées de diodes ou du motif à diodes (notamment si la zone à diodes de forme rectangulaire à proximité des deux extrémités latérales).

En particulier, la ou les bandes d'alignement sont sur une ou des ou toutes les bandes à pistes de préférence à proximité de la zone à diodes pour une meilleure manipulation par exemple à moins de 1cm de la zone à diodes.

Par exemple on utilise une ou des bandes adhésives double face, identique en nature et en épaisseur et même en largeur à la bande adhésive double face formant ledit adhésif étanche à l'eau liquide.

De préférence l'adhésif étanche à l'eau liquide et la ou les bandes d'alignement tiennent à une température d'au moins 100°C et même d'au moins 150°C, en particulier supportent le cycle de feuilletage.

Par exemple, une (chaque) bande adhésive double face selon l'invention (bande externe, bande d'étanchéité, bande d'alignement) comporte un substrat polymérique (polyester, par exemple PET) ou métallique avec des faces principales adhésivées (par exemple acrylique). Une (chaque) bande adhésive double face selon l'invention peut être opaque surtout s'il est masqué.

Si nécessaire, par exemple si non masqué, la bande (chaque) adhésif double face visible selon l'invention est transparente.

Il peut y avoir une zone (bande) dépassante unique ou un ensemble de zones (bandes) dépassantes dans le prolongement de la zone interne.

Par ailleurs, alternativement ou cumulativement, dans la zone dépassante (unique ou en plusieurs bandes, notamment autant de bandes que dans la zone interne), le support des diodes peut être courbé avec une partie dite terminale dans une zone en périphérie de la face F4, collée avec une bande adhésive double face dite bande externe (en une ou plusieurs bandes,) sur la face avant du support des diodes pour le vitrage à zone lumineuse interne (premier objet) ou sur la face arrière du support des diodes pour le vitrage à signalisation extérieure (deuxième objet).

La bande externe peut être une bande externe unique ou forme un ensemble de bandes adhésives externes double face individuelles espacées en elles, en particulier autant de bandes externes que de bandes à pistes, par exemple bandes externes espacées par une espace de largeur égale à la largeur W_{E}.

De préférence pour le vitrage à zone lumineuse interne la zone de la face arrière pour le collage d'un cadre métallique -démontable ou faisant partie de la carrosserie du véhicule- est au moins en partie en regard de la zone de la bande externe en face avant. La largeur du collage (cordon de colle) du cadre métallique est par exemple d'au plus 20mm notamment de 5 à 15mm.

De préférence pour le vitrage à signalisation extérieure la zone de la face avant pour le collage d'un cadre métallique -démontable ou faisant partie de la carrosserie du véhicule- est au moins en partie en regard de la zone de la bande externe en face avant. La largeur du collage (cordon de colle) du cadre métallique est par exemple d'au plus 20mm notamment de 5 à 15mm.

Le cadre métallique n'est pas forcément une boucle fermée autour du vitrage feuilleté bombé par exemple est une bande (rectiligne), une forme de L, une forme de U.

La partie terminale du support à diodes peut être liée (par clipsage, soudage surmoulage etc) à un connecteur électrique lui-même qui peut être relié à un système de câble électrique menant à une unité de commande des diodes elle-même reliée de préférence à la batterie du véhicule.

Le connecteur électrique peut être contre, collé ou espacé de la face F4.

La distance entre la partie terminale et la deuxième tranche du deuxième vitrage est suffisamment grande pour que cette partie terminale soit accessible lors du montage ou du démontage. La longueur totale (dépliée) est ajustée pour la zone dépassante soit courbée et fixée en face F4, la zone dépassante a de préférence une longueur de 20 à 150cm.

Le deuxième vitrage peut comporter de préférence une encoche locale. La zone dépassante du support des diodes sort de la deuxième tranche via l'encoche. La profondeur de l'encoche peut être supérieure ou égale à l'épaisseur de la zone dépassante pour éviter une surépaisseur ou qu'elle soit visible de l'extérieur en cas de bord apparent. En pratique la profondeur de l'encoche est de préférence d'au plus 3mm ou même à d'au plus 1mm et mieux d'au moins l'épaisseur E3. La zone d'encoche laisse apparente l'intercalaire de feuilletage ou est dépourvue (sensiblement) d'intercalaire de feuilletage (ayant une découpe etc).

Les pistes électriques et l'espace dites interpistes entre les pistes voisines peuvent être couvertes par une matière électriquement isolante, telle une couche de résine ou vernis (dépôt par voie liquide etc) ou un film de protection transparent ou non (PET, polyimide etc) par exemple adhésivé. Cette matière peut servir de masquage des pistes électriques en particulier dans la zone à diodes (la zone interne pouvant être masquée autrement par exemple par un émail) et même dans la zone interne voire même dans la zone dépassante. Par exemple on choisit une couche, comme un vernis, opaque (noir etc). Cette couche peut être une couche minérale ou organique notamment de polymère teintée, par exemple en polyéthylène ou en polyméthacrylate de méthyle.

Dans une première configuration, la zone à diodes peut comporter plusieurs rangées de diodes (par exemple au moins 5 ou 8 diodes par rangée), chacune en contact électrique avec au moins deux pistes électriques, chacune des diodes de largeur W4 d'au plus 5mm et espacées d'au plus 1cm de préférence au plus 5 rangées. Par exemple on choisit deux ou trois rangées de diodes (par exemple de 8 diodes par rangée) de largeur 4mm et espacées de 1cm.Si on veut limiter la largeur de la zone à diodes on peut limiter à trois rangées maximum.

La zone à diodes peut s'étendre sur une fraction de la longueur de la première tranche et sur toute la longueur notamment sans être débouchante du vitrage feuilleté bombé. La largeur (W0) de la zone à diodes peut être de préférence d'au plus 10cm et même 6cm.

Dans une deuxième configuration, la zone à diodes peut comporter une pluralité de diodes émettant une lumière polychromatique, (par exemple au moins 5 ou 8 diodes) notamment en une ou plusieurs rangées, chacune en contact électrique avec au moins quatre pistes électriques, chacune des diodes de largeur W4 d'au plus 5mm et même d'au plus 1mm voire même d'au plus 0,5mm et espacées d'au plus 2cm. Par exemple on choisit une rangée de 8 diodes de largeur 4mm et espacées de 1cm.

Dans une configuration, les diodes peuvent former un motif lumineux par exemple géométrique, en particulier un pictogramme.

Pour un pare-brise de véhicule automobile, ce peut être une flèche, une série de flèches (qui s'allume indépendamment par exemple pour former un clignotant), un triangle de secours ou toute autre symbole sur l'état de la voiture ou sur des informations extérieures (accident, alarme lumineuse anti collisions, état du trafic, du réseau de communication, itinéraire à suivre).

Pour un toit ou une vitre latérale, ce peut être par exemple un cercle ou rond lumineux.

Pour une lunette de véhicule automobile, ce peut être une flèche, une série de flèches (qui s'allume indépendamment par exemple pour former un répatiteur de clignotant), un triangle de secours ou tout autre symbole sur l'état de la voiture ou sur des informations extérieures (accident, alarme lumineuse anti collisions).

Entre la face F2 ou F3, dans la zone à diodes et/ou dans la zone interne, le support des diodes peut comporter sur la face avant un autre ou des autres composants électroniques d'épaisseur E5 submillimétrique et mieux d'au plus 0,8mm (et/ou inférieure ou égale à l'épaisseur E4 des diodes) choisis parmi l'un au moins des éléments suivants: un élément résistif, un élément capacitif, un transistor, un microcontrôleur (pour réguler le courant d'alimentation des diodes, afin de les protéger et même d'en réguler la luminance), ou même un composant optoélectronique.

Bien sûr, le support des diodes peut comporter alternativement ou cumulativement la face avant dans la zone dépassante un autre ou des autres composants électroniques d'épaisseur E5 submillimétrique ou non choisis parmi l'un au moins des éléments suivants: un élément résistif, un élément capacitif, un transistor, un microcontrôleur, un composant optoélectronique.

Une diode selon l'invention peut être préférentiellement un composant monté en surface (SMD en anglais) comportant souvent une enveloppe périphérique.

Dans un mode de réalisation préféré, chaque diode, de préférence de puissance, étant un composant incluant une puce semi-conductrice, et est équipée d'une enveloppe périphérique (souvent dénommée « packaging »), polymérique ou céramique, encapsulant la tranche du composant (et définissant la tranche de la diode), et débordant sur la face avant du composant en entourant la puce semi-conductrice.

La diode peut comprendre une résine de protection ou une matière à fonction de conversion de couleur même juste sur la puce semi-conductrice. La puce-semiconductrice peut être noyée dans une matière (résine, etc).

La diode peut être dénuée d'élément optique (au-dessus de la puce-semi conductrice (noyée ou non dans de la matière) pour faciliter une compacité.

L'enveloppe peut correspondre à l'épaisseur maximale (hauteur) E4 de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

L'enveloppe (monolithique ou en deux pièces) peut comprendre une partie formant embase porteuse de la puce semi-conductrice et une partie formant réflecteur, évasée en s'éloignant de l'embase (plus haute que la puce),

De préférence les diodes ont une émission lambertienne ou quasi lambertienne.

On peut se référer au livre intitulé « Les leds pour l'éclairage », de Laurent Massol, édition Dunod pour les différentes types de diodes.

Les diodes sont à émission par le haut (top emitting en anglais) plutôt que par le côté (side emitting en anglais).

La largeur W4 (et même longueur L4) d'une diode avec une seule puce semi conductrice, généralement diode de forme carrée, est de préférence d'au plus 5mm et même d'au plus 1mm. La longueur d'une diode (à lumière polychromatique) avec une pluralité des puces semi- conductrices (typiquement entourées par l'enveloppe commune périphérique), généralement de forme rectangulaire, est de préférence d'au plus 20mm mieux d'au plus 10mm et même d'au plus 5mm.

Les diodes sont de préférence des diodes de puissances qui sont en fonctionnement sous alimentées électriquement en courant, de préférence avec un facteur d'au moins 10 et même d'au moins 20 (donc intensité /10 voire intensité/20) notamment de façon à maintenir une température inférieure à la température de ramollissement du matériau polymérique de l'intercalaire de feuilletage, en particulier d'au plus 130°C, mieux d'au plus 120°C et même d'au plus 100°C.

Ces diodes garantissent une excellente efficacité sans trop chauffer.

Par exemple pour des diodes alimentées en courant à 1A on choisit entre 50 et 100mA.

Les diodes inorganiques sont par exemple à base de phosphure de gallium, de nitrure de gallium, de gallium et d'aluminium.

Comme diodes on peut citer la gamme des OSLON BLACK FLAT vendue par OSRAM ou la gamme OSRAM Sonyos PXXXX. Pour la lumière rouge, on peut citer comme diode vendue par OSRAM : OSLON BLACK FLAT Lx H9PP. Pour la lumière orange (ambre), on peut citer comme diode vendue par OSRAM : LCY H9PP. Pour la lumière blanche on peut citer comme diode vendue par OSRAM : LUW H9QP ou KW HxL531.TE où x = est nombre de puces dans la diode (par exemple 4 ou 5).

Comme PCB flexible on peut citer la gamme des produits AKAFLEX® (notamment PCL FW) de la société KREMPEL.

Dans un mode de réalisation du véhicule, il comporte au moins une unité de commande pour piloter les diodes et même au moins un capteur notamment pour détecter les situations dangereuses. L'unité de commande pour piloter les diodes peut être hors du vitrage feuilleté ou même dans le vitrage feuilleté, sur ou en dehors du support à diodes.

Le vitrage (pare-brise, lunette arrière, vitrage latérale) peut comporter plusieurs signalisations lumineuses avec la même fonction ou des fonctions distinctes.

Les diodes peuvent être arrangées pour former une ou des lettres, un symbole (triangle, symbole de panne ou de danger etc), une flèche, en utilisant une ou plusieurs cartes PCB...

En particulier, pour le pare-brise, les diodes peuvent être arrangées pour former une ou des lettres, un symbole (triangle, symbole de panne ou de danger etc), une ou des flèches (gauche et droite indicatrices du clignotant), en utilisant une ou plusieurs cartes PCB. On peut avoir autant de support des diodes et ensemble de diodes tel que décrit précédemment que nécessaire. Par exemple :
- un premier ensemble le long d'un bord latéral gauche de préférence plus près du bord longitudinal bas que haut,
- un deuxième ensemble le long d'un bord latéral droit de préférence plus près du bord longitudinal bas que haut,
- un troisième ensemble le long du bord longitudinal bas de préférence côté conducteur,
- un quatrième ensemble au centre de préférence plus près du bord longitudinal bas que haut

On peut changer de couleur (en fonction du degré de sécurité etc) ou encore allumer plus ou moins de diodes (en fonction du degré de sécurité) etc.

Les pistes électriques peuvent être des bandes en particulier fines par exemple imprimées ou déposées par toute autre méthode de dépôt par voie liquide ou par exemple par dépôt physique en phase vapeur. Les pistes électriques peuvent aussi être éventuellement des fils.

Les pistes électriques par exemple rectilignes peuvent être métalliques notamment en cuivre ou encore aluminium, étain, argent ou or. Elles peuvent être de largeur Wp d'au plus 10 mm, mieux de 0,2 à 2mm, avec une couche de masquage dessus si nécessaire.

Les pistes électriques peuvent être aussi des bandes notamment plus larges résultant de la division d'une couche électroconductrice (mono ou multicouche) métallique (notamment en cuivre ou encore aluminium, étain, argent) ou or ou en oxyde conducteur transparent, division par des zones d'isolations électriques sans la matière électroconductrice. Ceci se fait par exemple par dépôt sélectif, par masquage par attaque (gravure laser, photolithographie etc). Les zones d'isolations électriques sont par exemple des bandes de largeur d'au plus 1mm et même d'au plus 0,1mm.

Une ou de pistes électriques peuvent transmettre des signaux de données.

Dans un mode de réalisation, le support des diodes comporte un film en matière plastique de préférence transparent, de préférence en polytéréphtalate d'éthylène dénommé PET, un polyester, un polyimide , un polyamide, ou encore un poly(naphtalate d'éthylène) dénommé PEN ou encore, un polybutadiène, un poly(chlorure de vinyle) dénommé PVC, un polycarbonate dénommé PC, ou un polyétheréthercétone (PEEK), voire un acrylate. Des films de polyimide ont une meilleure tenue en la température plus élevée par rapport à l'alternative PET ou même PEN. Le support peut comporter plusieurs couches plastiques.

Le support des diodes est pourvu des pistes électriques, notamment métalliques ou en oxyde conducteur transparent, équipée des diodes montées en surface.

On préfère que les pistes conductrices et le film soient transparents lorsqu'ils sont visibles c'est-à-dire dans le clair de vue du vitrage. Les pistes électriques peuvent être transparentes de par la matière transparente ou par leur largeur suffisamment fine pour être (quasi) invisibles.

Sur un support des diodes donné, les diodes peuvent émettre la même lumière ou une lumière de couleurs différente, de préférence pas en même temps.

Classiquement, les diodes sont en (au moins) une rangée formant une bande lumineuse le long d'un bord longitudinal ou latéral du pare-brise (côté conducteur) ou de la lunette arrière ou de la vitre latérale.

Le premier vitrage peut comprendre une couche opaque en face F2 (cadre émaillé en général) et le deuxième vitrage peut comprendre une couche opaque (cadre émaillé en général) en face F4 ou en face F3. Leurs largeurs sont identiques ou distinctes. Par exemple, notamment pour un parebrise de véhicule automobile, la largeur peut être de 5 à 20cm pour le bord longitudinal inférieur, de 2 à 15cm pour le bord longitudinal inférieur (zone centrale plus large possible), de 1 à 10cm pour un bord latéral.

Le support des diodes peut être dans le clair de vitre, espacée ou non des bords opaques (cadre émaillé en général). Par exemple on dispose le support des diodes :
- le long d'un bord latéral ou longitudinal
- ou encore plus central notamment sensiblement à mi-chemin des bords latéraux et même plus proche du bord longitudinal inférieur (en position monté) que du bord longitudinal supérieur.

Le support des diodes (au moins la zone à diodes) peut être agencée dans ou au voisinage de la région d'une couche de masquage opaque, le long d'un bord périphérique du vitrage feuilleté bombé, généralement (cadre émaillé) en face F2 et face F4 ou encore (cadre émaillé) en face F2 et en face F3.

Le support des diodes est polymérique ou essentiellement polymérique, notamment matériau « sandwich », par exemple incluant un feuillet métallique notamment anti lumière parasite côté face arrière du support PCB.

La zone à diodes est de préférence dans une zone périphérique par exemple pour préserver le clair de vitre et/ou la TL, de préférence à moins de 15cm ou même 10cm de la tranche du premier vitrage. Par exemple on dispose le support des diodes le long d'un bord latéral ou longitudinal de préférence à moins de 15cm du bord ou encore plus central notamment sensiblement à mi-chemin des bords latéraux et même plus proche du bord longitudinal inférieur (en position monté) que du bord longitudinal supérieur

La zone à diodes peut être placée en particulier dans la zone centrale côté bord longitudinal supérieur (qui est la zone habituelle du rétroviseur).Un masquage peut servir pour cacher des parties inutiles et disgracieuses du support à diodes et/ou des bandes à pistes pour n'en laisser visible de l'intérieur (resp de l'extérieur pour le deuxième objet) que les diodes. Tout procédé adapté à la nature peut être employé : impression telle que jet d'encre, sérigraphie, émail comme sur la face F2....

Les bandes à pistes sont par exemple masquées de l'intérieur par une couche de masquage de préférence en émail de préférence sur la face F3 ou F4 et/ou de l'extérieur par une couche de masquage de préférence sur la face F2, de préférence en émail.

Pour le vitrage à zone lumineuse interne, la zone à diodes peut être en regard d'une épargne d'une couche de masquage de préférence en émail de préférence sur la face F3 ou F4, épargne commune aux diodes ou en plusieurs épargnes individuelles pour les diodes, ou pour le vitrage à signalisation lumineuse externe, la zone à diodes peut être en regard d'une épargne d'une couche de masquage de préférence sur la face F2, de préférence en émail, épargne commune aux diodes ou en plusieurs épargnes individuelles pour les diodes.

L'épargne commune (ou individuelle) peut être débouchante sur le clair de vitre. On peut par exemple diminuer la largeur de la couche de masquage (émail) pour former le bord externe de l'épargne dans la zone en regard des diodes.

L'épargne commune (ou individuelle) peut être de forme rectangulaire ou carré par simplicité.

Plus précisément, dans un premier mode de réalisation en relation avec le premier objet, en particulier pour un pare-brise ou un toit, le support des diodes peut même être disposé dans une région périphérique du vitrage feuilleté bombé dans laquelle le premier vitrage est entièrement (ou partiellement) opaque par une couche de masquage opaque (la plus externe si une autre couche de masquage est côté deuxième vitrage) de préférence en face F2. Cette couche peut être une couche minérale de préférence un émail (noir ou toute autre couleur) ou organique notamment de polymère teintée, par exemple en polyéthylène ou en polyméthacrylate de méthyle.

Cette couche opaque peut être une couche pleine (fond continu) et éventuellement se terminant par des discontinuités notamment décoratives (surfaces sans couche opaque) en direction du centre du vitrage (du clair de vitre) par exemple sous forme d'un ensemble de motifs géométriques (en rond, rectangle, carré etc),ou non, de taille identiques ou distinctes (de taille de plus ou plus petite en s'éloignant de la tranche et/ou motifs de plus ou plus espacés en s'éloignant de la tranche).

Dans ce premier mode de réalisation, les diodes, voire la zone à diodes voire tout ou partie des bandes à pistes peut être visible uniquement à l'intérieur :
- pour afficher les informations - comme un avertissement (anti collisions) à un conducteur ou même à toute autre personne sans limiter la vue du conducteur à travers un pare-brise.
- pour un éclairage décoratif par exemple pour un toit.

Le deuxième vitrage en outre peut également être opaque dans cette région du vitrage feuilleté bombé par une couche de masquage opaque (la plus interne) de préférence sur la face F4 ou sur la face F3 et/ou encore sur l'une des faces principales de l'intercalaire de feuilletage. Cette couche de masquage peut être une couche minérale de préférence un émail (noir ou toute autre couleur) notamment sur la face F4 ou F3 ou organique notamment de polymère teintée, par exemple en polyéthylène ou en polyméthacrylate de méthyle. Cette couche opaque est de préférence une couche pleine de préférence sur la face F4 ou F3 et qui comporte alors :
- au moins une épargne individuelle pour chaque diode (par un masque au dépôt ou par retrait notamment laser) laissant visibles les diodes
- ou une épargne commune pour un groupe de diodes ou toutes les diodes dans la zone à diodes, laissant visibles les diodes.

La couche de masquage avec épargne(s) peut dépasser des bords de la zone à diodes d'au moins 0,1mm et même d'au plus 5mm ou d'au plus 2mm.

En regard des diodes, on peut ajouter une couche diffusante comme un émail blanc en face F4 voire en face F3. La couche diffusante peut être espacée ou jointive avec cette couche opaque (la plus interne).

Pour un confort visuel notamment, le vitrage feuilleté bombé peut comporter sur la face F3 ou (mieux) la face F4 en regard des diodes une couche diffusante, de préférence blanche, en particulier un émail (blanc).

Plus précisément, dans un deuxième mode de réalisation, en relation avec le deuxième objet, le support des diodes peut être disposé dans une région du vitrage feuilleté bombé (lunette arrière, vitre latérale, ou même pare-brise) dans laquelle le deuxième vitrage est opaque par une couche de masquage opaque (la plus interne si une autre couche de masquage est côté premier vitrage) de préférence sur la face F4 ou sur la face F3 et/ou encore sur l'une des faces principales de l'intercalaire de feuilletage. Cette couche de masquage peut être une couche minérale de préférence un émail (noir ou toute autre couleur) notamment sur la face F4 ou F3 ou organique notamment de polymère teintée, par exemple en polyéthylène ou en polyméthacrylate de méthyle.

Dans ce mode de réalisation, les diodes voire la zone à diodes voire tout ou partie des bandes à pistes est visible uniquement à l'extérieur, pour former toute sorte de signalisation lumineuse. Cette couche de masquage opaque peut être de préférence dans cette région du vitrage feuilleté bombé une couche pleine (fond continu) et éventuellement se terminant par des discontinuités notamment décoratives (surfaces sans couche opaque) en direction du centre du vitrage (du clair de vitre) par exemple sous forme d'un ensemble de motifs géométriques (en rond, rectangle, carré etc),ou non, de taille identiques ou distinctes (de taille de plus ou plus petite et/ou motifs de plus ou plus espacés en s'éloignant de la tranche) en particulier un émail.

Le deuxième vitrage peut être en outre opaque par une couche de masquage opaque (la plus externe) de préférence en F2.

Cette couche de masquage opaque comporte alors au moins des épargnes (par un masque au dépôt ou par retrait notamment laser) laissant visibles les diodes. En regard des diodes, on peut ajouter une couche diffusante comme un émail blanc en face F2 ou F1. La couche diffusante peut être espacée ou jointive avec cette couche opaque.

La couche de masquage avec épargne(s) peut dépasser des bords de la zone à diodes d'au moins 0,1mm et même d'au plus 5mm ou d'au plus 2mm.

Pour un confort visuel notamment, le vitrage feuilleté bombé de signalisation externe (vitrage latéral, lunette arrière etc) peut comporter en regard des diodes une couche diffusante sur la face F2 (voire F1), de préférence blanche en particulier un émail (blanc). On peut ainsi avoir un ensemble de motifs diffusants (blancs) de la taille des diodes (de préférence de taille adaptée pour éviter que les bords ne soient sombres à l'état allumé).

Le premier vitrage comme le deuxième vitrage peut être parallélépipédique, avec des feuilles ou des faces principales de préférence quadrilatères notamment rectangulaires, carrées voire même de toute autre forme (ronde, ovale, polygonale).

Le premier et/ou deuxième vitrage peut (selon le rendu esthétique, l'effet optique souhaité) être un verre clair (de transmission lumineuse T_{L} supérieure ou égale à 90% pour une épaisseur de 4mm), par exemple un verre de composition standard sodocalcique comme le Planilux® de la société Saint-Gobain Glass, ou extra-clair (TL supérieure ou égale à 91,5% pour une épaisseur de 4 mm), par exemple un verre silico-sodo-calcique avec moins de 0,05% de Fe III ou de Fe₂O₃ comme le verre Diamant® de Saint-Gobain Glass, ou Optiwhite® de Pilkington, ou B270® de Schott, ou d'autre composition décrite dans le document WO04/025334.on peut aussi choisir le verre Planiclear® de la société Saint-Gobain Glass.

Le verre du premier et/ou deuxième vitrage peut être neutre (sans coloration), ou (légèrement) teinté notamment gris ou vert, tel le verre TSA de la société Saint-Gobain Glass. Le verre du premier et/ou deuxième vitrage peut avoir subi un traitement chimique ou thermique du type durcissement, recuit ou une trempe (pour une meilleure résistance mécanique notamment) ou être semi trempé.

La transmission lumineuse T_{L} peut être mesurée selon la norme ISO 9050 :2003 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Le vitrage feuilleté bombé selon l'invention notamment pare-brise ou vitrage latéral, peut avoir une T_{L} -dans le clair de vitre- qui est de préférence d'au moins 70% et même d'au moins 75% ou même d'au moins80%.

Le vitrage feuilleté bombé selon l'invention, notamment toit vitré, peut avoir une transmission lumineuse T_{L} d'au plus 10% et même de 1 à 6%.

Pour un toit automobile, on préfère l'un au moins ou tous les critères suivants :
- une transmission énergétique T_{E} d'au plus 10% et même de 4 à 6%,
- une réflexion énergétique R_{E} (de préférence côté face F1) d'au plus 10%, mieux de 4 à 5%
- et une transmission totale de l'énergie solaire TTS <30% et même <26%, même de 20 à 23%.

Un tableau A ci-dessous donne des exemples de verre vendu par la Demanderesse. Le verre SGS THERMOCONTROL ® Absorbing/ Venus améliore le confort thermique en absorbant la charge énergétique dans la masse du verre. Ces verres sont divisés en deux catégories : « Vision » (Transmission lumineuse>70%) et « Privacy » (Transmission lumineuse <70%).

**Tableau A**

| Type de verre | TL (%) | TE (%) | RE (%) |
|---|---|---|---|
| SGS THERMOCONTROL® Venus Green 55 | 49 | 27 | 7 |
| Haute Performance teinté vert // Verre Clair | 28 | 16 | 3 |
| SGS THERMOCONTROL® Venus Green 35 | 35 | 22 | 5 |
| SGS THERMOCONTROL® Venus Grey 10 | 10 | 8 | 1 |
| SGS THERMOCONTROLO Absorbing TSA3+ | 71 | 44 | 18 |
| Verre standard vert | 78 | 53 | 25 |

Le verre « Vision » est adapté à tous les types de vitrage dans le véhicule: vert / bleu / gris et assure une transmission énergétique réduite (TE). La couleur la plus appréciée à cette fin est le vert. Elle a été choisie en raison de son aspect neutre qui n'affecte pas l'harmonie des couleurs d'un véhicule.

Le verre « Privacy » est un vitrage teinté dans la masse pour le confort thermique et l'intimité. C'est un vitrage surteinté vert foncé ou gris foncé. Pour assurer l'intimité, ce vitrage présente des valeurs de transmission lumineuse qui sont au-dessous de 70%, généralement autour de 55% ou moins. En raison de sa teinte foncée, ce type de verre assure aussi une faible transmission UV (les rayons UV peuvent causer des irritations de la peau).

Dans la plupart des pays, le verre Vénus / Privacy est adapté aux vitrages latéraux arrière (après le pilier B), lunette arrière et toit.

SGS THERMOCONTROL ® Venus est constitué de vitrage surteinté de couleur gris foncé ou vert foncé. Ils ont tous les avantages thermiques du verre de type « Vision » (SGS THERMOCONTROL ® Type) avec une protection solaire améliorée:
- des valeurs plus faibles en transmission énergétique (par rapport à toutes les autres solutions de verre),
- sa couleur foncée bloque également le rayonnement UV, qui est responsable de l'irritation de la peau et la décoloration de l'habitacle,
- offre une plus grande intimité pour les passagers du véhicule (il est difficile de voir à travers le verre depuis l'extérieur).

De préférence le vitrage feuilleté bombé forme un pare-brise de véhicule routier tel qu'une automobile, un camion.

Le bombage des premier et deuxième vitrages (pare-brise notamment) peut être dans une ou plusieurs directions par exemple comme décrit dans le document WO2010136702.

L'aire de la face principale F1 (parebrise ou toit notamment) peut être supérieure à 1 ,5 m² et être par exemple inférieure à 3m².

La première tranche (comme la deuxième tranche) peut être une tranche longitudinale de longueur Li de 1 à 3m (notamment pour un pare-brise ou un toit ou une lunette arrière) ou encore de 0,1 à 1m (notamment pour une vitre latérale)

La première tranche (comme la deuxième tranche) peut être une tranche latérale de longueur Lj de 0,5 à 2,5m (notamment pour un pare brise notamment panoramique ou un toit ou une lunette arrière) ou encore de 0,1 à 1m (notamment pour une vitre latérale).

Le vitrage extérieur peut comporter des couches minces fonctionnelles sur l'une ou l'autre de ses faces F1 et F2 ou bien les deux : on peut citer une couche hydrophobe ou autonettoyante photocatalytique en face F1.

Afin de limiter l'échauffement dans l'habitacle ou de limiter l'usage d'air conditionné, l'un des vitrages au moins (de préférence le verre extérieur) est teinté, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO,ou d'empilements de couches minces comprenant au moins une couche d'argent (en F2 ou F3), là où chaque couche d'argent étant disposée entre des couches diélectriques.

On peut cumuler couche (à l'argent) en face F2 et/ou F3 et couche TCO en face F4.

La couche TCO (d'un oxyde transparent électro-conducteur) est de préférence une couche d'oxyde d'étain dopé au fluor (SnO₂:F) ou une couche d'oxyde mixte d'étain et d'indium (ITO).

D'autres couches sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.

L'ITO est particulièrement préféré, notamment par rapport au SnO₂:F. De conductivité électrique plus élevée, son épaisseur peut être plus faible pour obtenir un même niveau d'émissivité. Aisément déposées par un procédé de pulvérisation cathodique, notamment assisté par champ magnétique, appelé « procédé magnétron », ces couches se distinguent par une plus faible rugosité, et donc un plus faible encrassement.

Un des avantages de l'oxyde d'étain dopé au fluor est en revanche sa facilité de dépôt par dépôt chimique en phase vapeur (CVD), qui contrairement au procédé de pulvérisation cathodique, ne nécessite pas de traitement thermique ultérieur, et peut être mis en oeuvre sur la ligne de production de verre plat par flottage.

Par « émissivité », on entend l'émissivité normale à 283 K au sens de la norme EN12898. L'épaisseur de la couche basse émissivité (TCO etc) est ajustée, en fonction de la nature de la couche, de manière à obtenir l'émissivité voulue, laquelle dépend des performances thermiques recherchées. L'émissivité de la couche basse émissivité est par exemple inférieure ou égale à 0,3, notamment à 0,25 ou même à 0,2. Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm.

Par exemple la couche basse émissivité comprend la séquence suivante :sous-couche haut indice/sous-couche bas indice/ une couche TCO/ surcouche diélectrique optionnelle.

Comme exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm))/ surcouche bas indice (<90 nm) barrière/ dernière couche (< 10 nm).

On peut citer comme couche basse émissivité celles décrites dans le brevet US2015/0146286, sur la face F4, notamment dans les exemples 1 à 3.

En particulier, la face F4 du vitrage feuilleté, est revêtue d'une couche fonctionnelle transparente notamment basse émissivité, de préférence comprenant une couche TCO, dont une zone (alimentée électriquement, donc électrode) formant bouton tactile (pour piloter la première surface lumineuse).

Naturellement, l'intercalaire de feuilletage peut être en contact direct avec la face F3 (respectivement F2 pour le deuxième objet) ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir ou toute autre couleur.

Dans un mode de réalisation de la présente invention, l'intercalaire de feuilletage présente dans une zone de chauffage (couvrant tout ou partie d'une face principale) une pluralité de fils métalliques individuels de préférence placés sur la face principale côté opposé à celles, appelés « fils métalliques chauffants » qui relient des bandes d'amenée de courant ou « busbars » entre elles. La zone de chauffage peut être dans tout ou partie dans la zone à diodes et/ou des bandes à pistes. De préférence les fils sont placés sur la face principale opposée à celle côté face avant du support à diodes (donc face F'3 pour le premier objet et face F'2 pour le deuxième objet).

Le courant de chauffage passe par ces fils métalliques individuels. Les fils sont avantageusement très minces de manière à ne pas, ou seulement très peu, détériorer la transparence de la vitre. De préférence, les fils métalliques ont une épaisseur inférieure ou égale à 0,1mm, en particulier comprise entre 0,02 et 0,04mm, et idéalement entre 0,024mm et 0,029mm. Les fils métalliques contiennent de préférence du cuivre, du tungstène, de l'or, de l'argent ou de l'aluminium ou un alliage d'au moins deux de ces métaux. L'alliage peut également contenir du molybdène, du rhénium, de l'osmium, de l'iridium, du palladium ou du platine. Les fils métalliques sont de préférence isolés électriquement, par exemple au moyen de gaines. Ceci est particulièrement utile lorsque les fils sont sous tension de la vitre.

L'invention concerne bien entendu tout véhicule comportant au moins un vitrage de signalisation lumineuse tel que décrit précédemment et en particulier :
- le vitrage de zone lumineuse interne formant pare-brise, la lumière est un moyen anti collision (sur (auto)route ou même en ville) notamment par détection d'une distance à la voiture (ou tout autre moyen de locomotion tel que moto, vélo, trottinette etc ou encore un animal) de devant (ou d'un objet ou d'une personne comme un piéton) trop courte, ou encore par détection d'une distance trop courte d'un objet ou d'une personne ou d'une voiture ou tout autre moyen de locomotion (vélo, moto etc) sur le côté de la voiture, côté gauche ou côté droit, et allumage des diodes de préférence en rouge ou, plus progressivement, en orange (ambre) puis en rouge, ou même avec trois ou plus niveaux donc couleurs
- ou le vitrage de signalisation lumineuse externe formant la lunette arrière est un vitrage incluant un feu stop (par exemple au moins 60cd), un troisième feu stop (par exemple entre 25 et 80cd), un clignotant (par exemple au moins 50cd), un feu de détresse ou un feu de repérage du véhicule
- le vitrage de signalisation lumineuse externe formant vitrage latérale est un vitrage incluant un feu de détresse (en situation de panne etc) ou un feu de repérage du véhicule (à l'arrêt, sur un parking, en ville etc) un répétiteur de clignotant (vitrage latérale avant -notamment proche du rétroviseur- pour être vu quand le véhicule est doublé, par exemple entre 0,6 et 20cd).

On peut aussi former feux de gabarit, feux de stationnement, feux de position latéraux.

La présente invention est à présent expliquée plus en détail en référence aux figures annexées dans lesquelles :

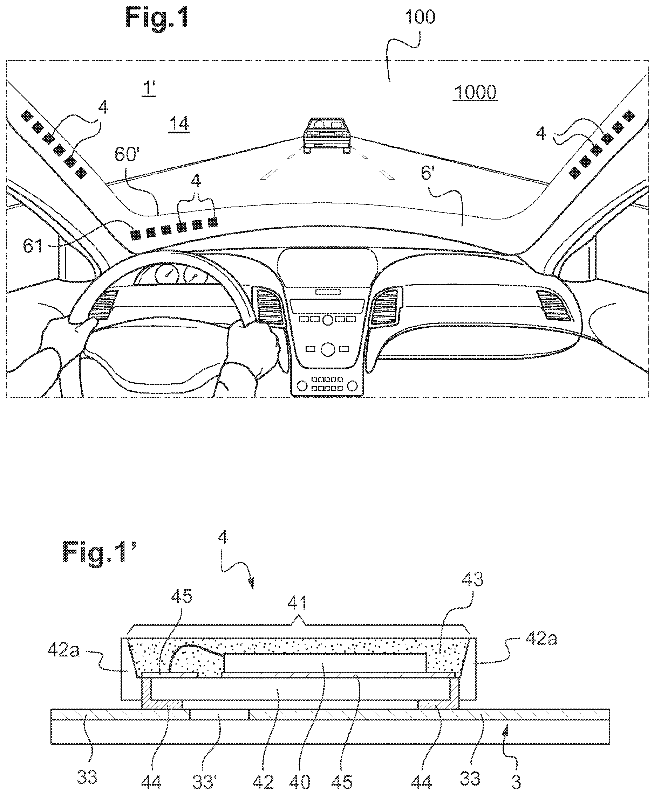

La figure 1 montre côté face F4 une vue schématique d'un pare-brise monté sur un véhicule automobile sur une route, pare-brise avec la zone lumineuse interne dans un mode de réalisation de l'invention.
La figure 1' montre une vue schématique de coupe de diodes montées sur un support à diodes selon l'invention.
La figure 2 montre une vue schématique partielle en coupe d'un vitrage feuilleté bombé de véhicule à zone lumineuse interne dans un mode de réalisation de l'invention.

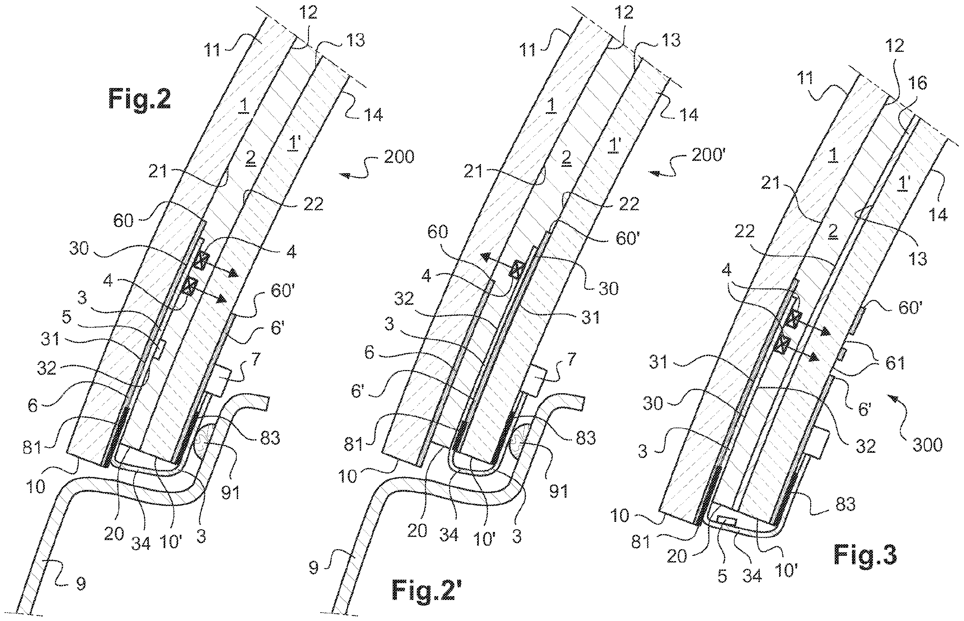

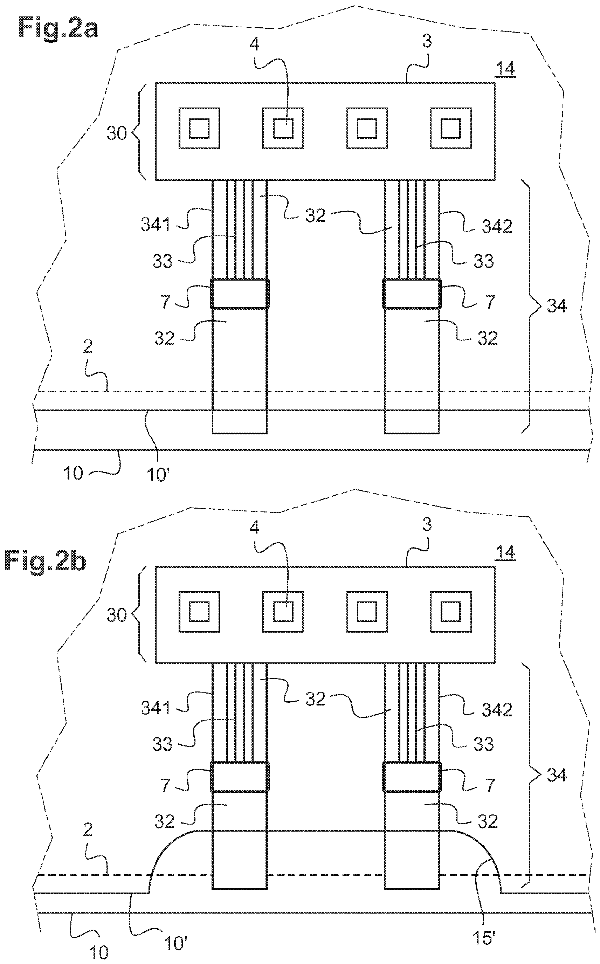

La figure 2' montre une vue schématique partielle en coupe d'un vitrage feuilleté bombé de véhicule à zone lumineuse externe dans un mode de réalisation de l'invention.
La figure 3 montre une vue schématique partielle en coupe d'un vitrage feuilleté bombé de véhicule à zone lumineuse interne dans un mode de réalisation de l'invention.
Les figures 2a, 2b, montrent chacune une vue schématique partielle de face d'un vitrage feuilleté bombé de véhicule à zone lumineuse interne dans un mode de réalisation de l'invention.

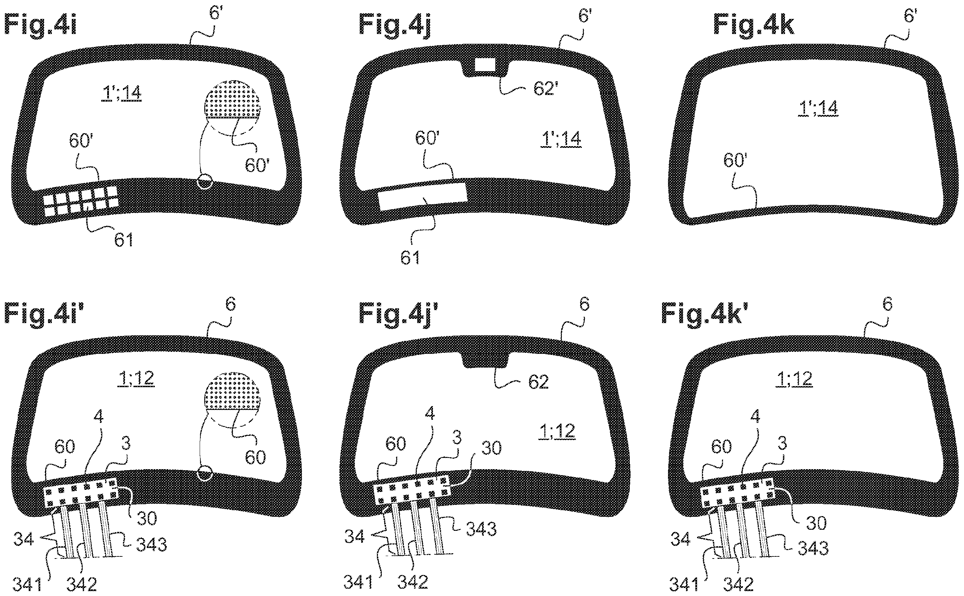

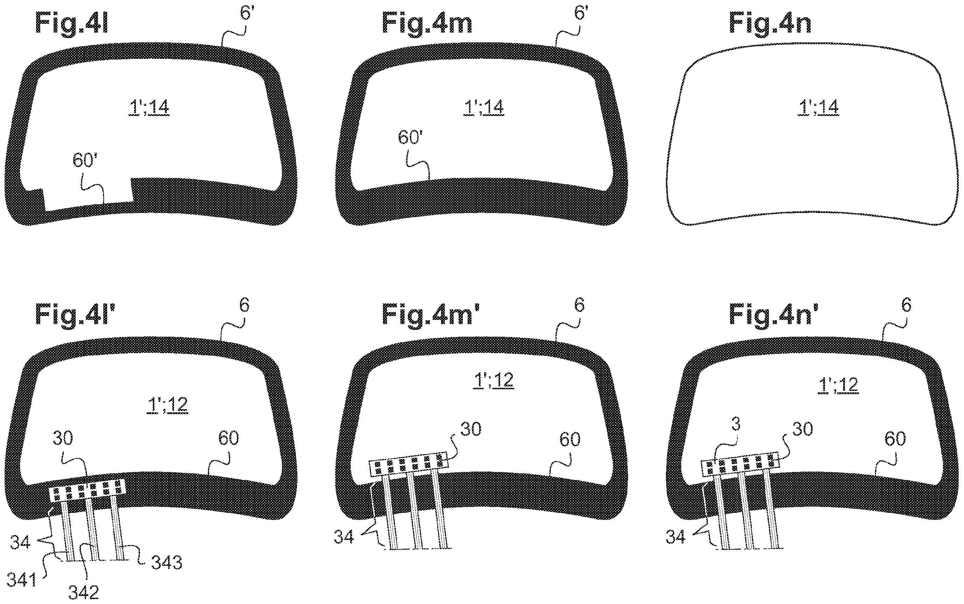

Les figures 4i à 4n montrent des vitrages internes avec leur couche interne de masquage et les figures 4'i à 4'n montrent des vitrages externes avec leur couche externe de masquage et les supports de diodes selon l'invention.

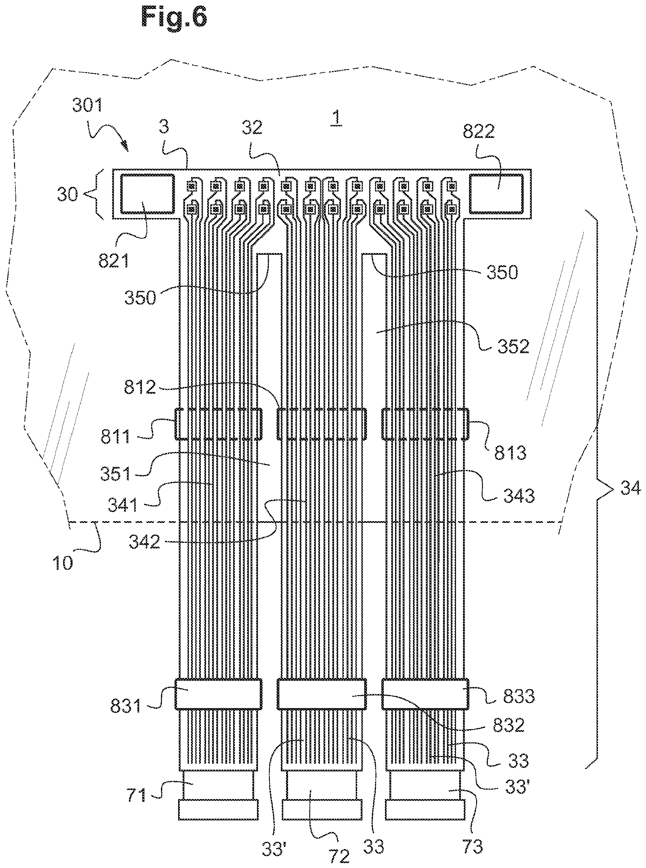

Les figures 6, 7, 8, 9, 10, 11,12 montrent chacune une vue schématique partielle de face d'un vitrage feuilleté bombé de véhicule à zone lumineuse interne dans un mode de réalisation de l'invention.

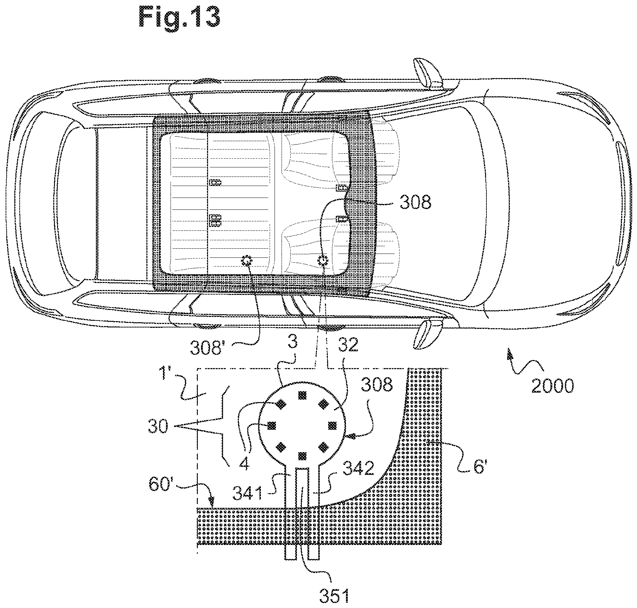

La figure 13 montre une vue schématique côté face F1 d'un toit vitré feuilleté bombé monté sur un véhicule automobile sur une route, toit avec la zone lumineuse interne dans un mode de réalisation de l'invention.

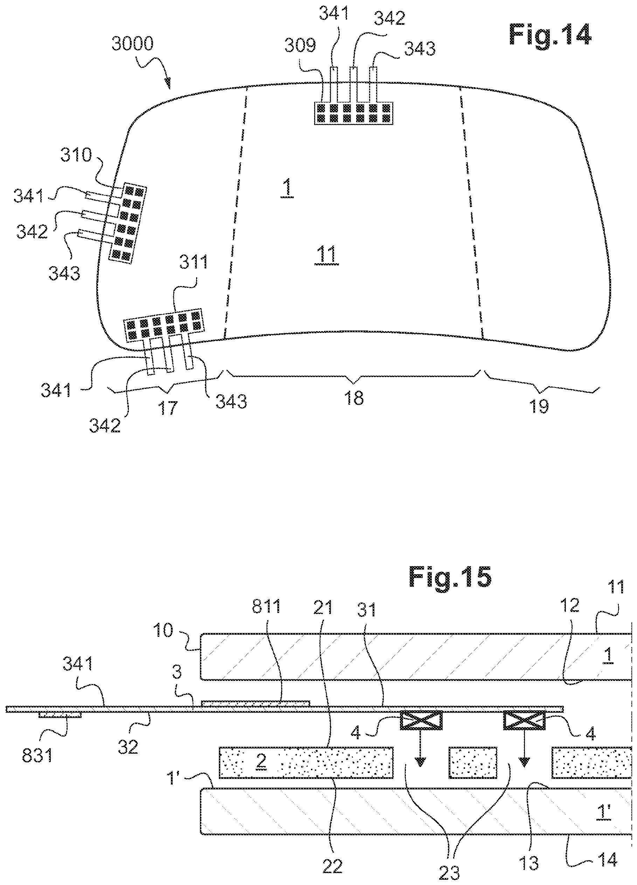

La figure 14 est une vue schématique de face côté face F1 d'une lunette arrière à signalisation lumineuse externe dans un mode de réalisation de l'invention
La figure 15 est une vue schématique éclaté d'un vitrage feuilleté bombé de véhicule dans un mode de réalisation de l'invention

Les éléments dessinés ne sont pas à l'échelle.

La figure 1 montre (à partir de la vision de l'intérieur du véhicule) un pare-brise 1000 d'un véhicule automobile roulant sur une route à trois voies avec une voiture devant.

Le pare-brise est un vitrage feuilleté bombé avec des premier et deuxième vitrages avec la signalisation lumineuse interne visible par transparence du coté de la face principale la plus interne 14 du vitrage interne.

Le pare-brise comporte :
- un premier ensemble de six diodes électroluminescentes inorganiques 4 montées sur une première carte de circuit imprimé, par exemple opaque, dont la zone à diodes est intégrée entre les premier et deuxième vitrages, diodes par exemple polychromatique et en une rangée disposées dans une zone de bord du pare-brise le long du bord longitudinal inférieur notamment côté conducteur (pour une aide à la conduite optimisée), zone à diodes devant une zone périphérique de masquage (émail ..) du premier vitrage ou vitrage extérieur et derrière une zone périphérique de masquage (émail..) du deuxième vitrage ou vitrage intérieur 1' dans lequel sont ménagées des épargnes individuelles 61 laissant passer la lumière des diodes 4,
- un deuxième ensemble de six diodes électroluminescentes inorganiques 4 montées sur une deuxième carte de circuit imprimé, par exemple opaque, dont la zone à diodes est intégrée entre les premier et deuxième vitrages, diodes par exemple polychromatique en une rangée disposées dans une zone de bord du pare-brise le long du bord latéral (gauche), notamment côté conducteur, zone à diodes devant une zone périphérique de masquage (émail ...) du vitrage extérieur et derrière une zone périphérique de masquage (émail ...) du vitrage intérieur dans lequel sont ménagées des épargnes individuelles laissant passer la lumière des diodes.,
- un troisième ensemble de six diodes électroluminescentes inorganiques 4 montées sur une troisième carte de circuit imprimé, par exemple opaque, dont la zone à diodes est intégrée entre les premier et deuxième vitrages, diodes par exemple polychromatique en une rangée disposées dans une zone de bord du pare-brise le long du bord latéral droit notamment côté copilote, zone à diodes devant une zone périphérique de masquage (émail ...) du vitrage extérieur et derrière une zone périphérique de masquage (émail ..) du vitrage intérieur dans lequel sont ménagées des épargnes individuelles laissant passer la lumière des diodes.

Ces diodes en particulier du premier ensemble peuvent émettre de la lumière rouge alertant le conducteur lorsque la voiture avant (ou tout autre moyen de locomotion ou encore un animal) est détectée trop proche. La lumière rouge peut être continue ou clignotante. La lumière choisie continue peut augmenter en intensité au fur et à mesure que la voiture de devant est proche ou à partir d'une distance prédéterminée dite distance à fort risque. La fréquence de lumière choisie clignotante peut augmenter au fur et à mesure que la voiture de devant est proche ou à partir d'une distance prédéterminée dite distance à fort risque.

Lorsque la voiture de devant est suffisamment éloignée (respect de la distance de sécurité), les diodes sont éteintes.

Ces diodes en particulier du deuxième ensemble peuvent émettre de la lumière rouge alertant le conducteur lorsqu'une voiture (ou tout autre moyen de locomotion ou encore un animal) est détectée trop proche sur le côté gauche de la voiture. La lumière rouge peut être continue ou clignotante. La lumière choisie continue peut augmenter en intensité au fur et à mesure que la voiture sur le côté est proche ou à partir d'une distance prédéterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée, les diodes sont éteintes.

Ces diodes en particulier du troisième ensemble peuvent émettre de la lumière rouge alertant le conducteur lorsqu'une voiture (ou tout autre moyen de locomotion ou encore un animal) est détectée trop proche sur le côté droit de la voiture. La lumière rouge peut être continue ou clignotante. La lumière choisie continue peut augmenter en intensité au fur et à mesure que la voiture sur le côté droit est proche ou à partir d'une distance prédéterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée, les diodes sont éteintes.

Le système anti collision fonctionne sur n'importe quelle route : autoroute, en ville. Il peut servir aussi pour alerter de la présence trop rapprochée d'un objet, d'un piéton etc.

La lumière de signalisation peut aussi passer d'une couleur (par exemple orange ou ambre) lorsque le véhicule à une distance à risque à une autre couleur par exemple rouge lorsque le véhicule à une distance plus courte encore plus dangereuse.

Dans ces cas, on prévoit autant de diodes que nécessaires par exemple une rangée avec une alternance de diodes rouges et de diodes orange ou une rangée par couleur. On peut aussi avoir au moins trois niveaux de signalisation (trois couleurs).

Le véhicule intègre au moins un capteur (de préférence un par ensemble de diodes ayant la même fonction) pour détecter ces situations dangereuses (non-respect de la distance de sécurité ou autres) et au moins une unité de commande pour piloter les diodes par exemple extérieure au pare-brise.

Pour cette fonction d'avertissement, toute carte PCB avec des diodes est de préférence dans le quadrant inférieur côté conducteur.

Les diodes 4 ne sont pas nécessairement en rangée, parallèle au bord du vitrage ils peuvent former des motifs lumineux par exemple des pictogrammes.

La figure 1' montre une vue de coupe de diodes montées sur un support de diodes selon l'invention.

La diode électroluminescente inorganique 4 est un composant monté en surface (CMS ou SMD en anglais) comportant alors une enveloppe périphérique (souvent dénommée « packaging ») 42a.
Chaque diode est un composant électronique incluant au moins une puce semi-conductrice 40, et est équipée de l'enveloppe périphérique 42a (, polymérique ou céramique, formant une encapsulation périphérique de la tranche du composant électronique. La diode est à émission par le haut.

L'enveloppe peut correspondre à l'épaisseur maximale (hauteur) E2 de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

L'enveloppe (monolithique ou en deux pièces) peut comprendre une partie formant embase 42 porteuse de la puce 40 et une partie formant réflecteur s'éloignant de l'embase et plus haute que la puce, contenant une résine de protection 43 et/ une matière à fonction de conversion de couleur. On peut définir la surface avant 41 comme la surface de cette matière couvrant la puce en retrait ou au niveau de la surface « avant » du réflecteur.

Les contacts 44 d'anode et de cathode se font par exemple par un collage conducteur sur une couche électroconductrice avec une zone isolée 33'. Les contacts sont prolongés par des trous conducteurs (ou « via hole » en anglais) dans l'embase jusqu'à des zones de couches 45, l'une 45 relié par un fil à la cathode.

La figure 2 est une vue schématique de coupe d'un pare-brise à signalisation lumineuse interne 200 dans un mode de réalisation de l'invention, comprenant un vitrage feuilleté bombé comportant :
- un premier vitrage 1, par exemple en verre TSA de la demanderesse d'épaisseur E1 égale 2,1mm, formant vitrage extérieur, de préférence teinté, avec des première et deuxième faces principales 11, 12 respectivement dites face F1 -- et face F2, et une tranche 10
- un deuxième vitrage 1', formant vitrage intérieur par exemple en verre clair ou extraclair et de 2,1mm d'épaisseur E'1 ou même de 1,6mm ou même moins, avec des troisième et quatrième faces principales 13, 14 respectivement dites face F3 et face F4, la face F4 éventuellement revêtue d'une couche fonctionnelle (basse émissivité etc), et avec une deuxième tranche 10' du côté de la première tranche de préférence en retrait de la première tranche par exemple d'au plus 1mm, la face F2 et la face F3 étant les faces internes 11, 11' du vitrage feuilleté bombé
- entre les vitrages, un intercalaire de feuilletage 2 en matière polymérique, ici en PVB, de préférence clair ou extraclair, d'épaisseur E2 submillimétrique de préférence, par exemple un PVB (par exemple RC41 de la société Solutia ou d'Eastman) de 0,76mm environ ou en variante si nécessaire un PVB acoustique (tricouche ou quadricouche) par exemple d'épaisseur 0,81mm environ, et même éventuellement PVB en coin (pour un affichage tête haute), PVB ayant une face principale 21 dite F'2 en contact adhésif avec la face F2 et une face principale 22 dite F'3 en contact adhésif avec la face F3 et une tranche 20 du côté de la première tranche 10, dite autre tranche, la face F'3 côté face F3 étant éventuellement porteuse d'un ensemble de fils métalliques (de chauffage) couvrant (sensiblement) la surface du pare- brise notamment en regard de diodes, notamment fils quasi invisibles, par exemple de 50µm, en forme des lignes droites ou non.

Le pare-brise comporte en outre une carte à circuit imprimé 3 avec des pistes électriques 33 et porteuse dans la zone feuilletée d'un ensemble de diodes électroluminescentes inorganiques 4, montées en surface (CMS ou SMD en anglais) sur la carte 3 et ayant une face émettrice de lumière en regard de la face F3 apte à émettre une lumière en direction de la face F3, par exemple émettant dans le rouge ou dans le vert. Les diodes 4 sont d'épaisseur E4 inférieure à E2, de préférence d'au plus 0,8mm. La distance H entre la face émettrice des diodes et la face F3 est de préférence non nulle et de préférence d'au plus 0,5mm et même allant de 0,1 à 0,3mm. Le PVB est absent ou présent entre la face émettrice des diodes et la face F3 en fonction du procédé de fabrication.

La carte 3 formant support des diodes est flexible, d'épaisseur E3 submillimétrique par exemple de 10 ou 50 à 200µm, par exemple un polymère comme un polyimide (et éventuellement un feuillet métallique en sandwich). Elle comporte sur la face avant 32 côté face F3 des zones électroconductrices d'alimentation électrique, dites pistes électriques 33 espacées par des zone d'isolation 33', une partie ou toutes les pistes électriques alimentant les diodes. L'intercalaire de feuilletage est présent entre la face avant 32 et la face F3

Le support de diodes 3 comporte plusieurs zones :
- entre les faces F2 et F3 la zone dite à diodes 30, comportant lesdites diodes 4 par exemple deux rangées de 8 diodes parallèles entre elles le long de la première tranche, zone à diodes définie par une longueur L0 d'au moins 6cm le long de la première tranche, et par exemple par une largeur W0 d'au plus 10cm et même d'au plus 5cm et de préférence d'au moins 1 cm
- une zone d'alimentation électrique débouchante 34 prolongeant la zone à diodes 30 et s'étendant en direction de la première tranche 10 et débouchant de l'autre tranche 20, comportant une zone d'alimentation dite zone interne, avec les pistes électriques, entre les faces F2 et F3, définie par une largeur Wt (parallèle à L0) inférieure à L0, zone interne prolongée par une zone d'alimentation au-delà de l'autre tranche 20 dite zone dépassante.

La zone interne est divisée en une pluralité de bandes dites à pistes, porteuses des pistes électriques, de largeur individuelle Wi inférieure à 5cm dans la zone interne, bandes à pistes débouchantes de l'autre tranche. La largeur totale Wt de la zone interne (somme des Wi) est de plus de 5cm pour augmenter le nombre de pistes électriques autant que possible. Les bandes à pistes sont par exemples dans la zone dépassante avec la même largeur Wi.

Dans la zone interne, l'intercalaire de feuilletage 2 est présent sur les bandes à pistes et dans l'espace dit espace interbande entre bandes à pistes voisines, de largeur W_{E} d'au moins 5mm et même d'au plus 20cm.

Dans la zone dépassante, le support des diodes 3 est courbé avec une partie terminale dans une zone en périphérie de la face F4, collée avec une bande adhésive double face 83 dite bande externe sur la face avant du support des diodes. La zone courbée est ici en retrait de la tranche 10.

Une zone de la face arrière comporte une colle 91 pour fixer un cadre métallique, par exemple la carrosserie 9 du véhicule, est en regard de la zone de la bande externe en face avant pour l'étanchéité. La colle est par exemple distante d'au moins 0,5mm et d'au plus 5cm de la deuxième tranche 10' et de largeur entre 5 et 15 mm.

La partie terminale est liée à un connecteur 7 par exemple à plus de 5cm de la tranche 10'. Entre la zone courbée et le cadre métallique il peut avoir d'autres éléments (lèvre, insert etc) qui peuvent venir se fixer sur la face F4.On peut ajuster la distance de la colle 91 par rapport à la deuxième tranche 10'.
Le support des diodes comporte sur la face avant un autre composant électronique 5 d'épaisseur E5 submillimétrique choisi parmi l'un au moins des éléments suivants: un élément résistif, un élément capacitif, un transistor, un microcontrôleur.

Le pare-brise comporte en outre un adhésif étanche à l'eau liquide 81, en forme de bande adhésive double face, positionnée entre la face F2 et la face arrière 31 du support à diodes dans une partie de la face arrière (laissant une surface de la face arrière contre la face F2). Cette bande est d'épaisseur E8 submillimétrique de préférence d'au plus 0,2mm, mieux d'au plus 0,1mm et mieux d'au plus 0,05mm notamment E3+E8 est de préférence d'au plus 0,15mm. De préférence elle est présente dans la zone de feuilletage, dépasse de l'autre tranche et même dépasse dépasse de la zone courbée pour être sûr que depuis la tranche 10 il n'y a pas de contact face arrière et face F2.

On peut choisir par exemple le produit 9496LE Clear 3M de la société 3M pour cette bande comme pour la bande externe.

Pour un vitrage alternatif avec une encapsulation polymérique (par exemple un toit) telle que le polyuréthane, ces bandes adhésives double faces 81, 83 peuvent servir d'étanchéité au moment d'une injection de la composition liquide.

Le support de diodes 3 et notamment les bandes à pistes est masqué de l'extérieur par une couche de masquage dite externe 6 en émail sur la face F2. Les bandes à pistes sont masquées de l'intérieur par une couche de masquage dite interne en émail 6' sur la face F4 ou en variante sur la face F3. Le bord interne 60' de la couche interne 60 est en retrait du bord interne 60 de la couche externe 6 pour laisser passer la lumière des diodes.

Comme diodes on peut choisir des OSLON Black Flat LUW H9QP.

La figure 2' montre une vue schématique partielle en coupe d'un vitrage feuilleté bombé de véhicule à zone lumineuse externe dans un mode de réalisation de l'invention. Il diffère de celui décrit en figure 2 en ce que le support à diodes 3 est sur la face F3 par exemple avec une rangée de diodes polychromatiques 4, avec la zone courbée allant encore jusqu'à la face F4. La face avant 32 est orientée côté face F2 (face arrière 31 côté face F3). Le bord interne 60 de la couche de masquage externe 60 est en retrait du bord interne 60' de la couche de masquage interne 6' sur la face F3 (ou en variante préférée sur la face F4) pour laisser passer la lumière des diodes 4.

La figure 3 montre une vue schématique partielle en coupe d'un vitrage feuilleté bombé de véhicule à zone lumineuse interne dans un mode de réalisation de l'invention. Il diffère de celui décrit en figure 2 en ce que le bord interne 60' est face au bord interne 60. La couche de masquage interne 6' comporte des épargnes individuelles 61 pour laisser passer la lumière des diodes 4. Le composant 5 est hors du feuilletage dans la zone courbée. En variante, la couche de masquage interne est sur la face F3. Une couche 16 athermique et/ou chauffante est sur la face F3 ou en variante sur un film plastique comme un PET en sandwich dans le PVB.

Les figures 2a, 2b montrent chacune une vue schématique partielle de face d'un vitrage feuilleté bombé de véhicule à zone lumineuse interne dans un mode de réalisation de l'invention. Les couches de masquage sur les vitrages ne sont pas représentées pour voir les éléments ainsi que la partie des pistes électriques allant jusqu'aux diodes. Le PVB 2 est en retrait de la deuxième tranche 10'.

La zone à diodes 30 est une bande rectangulaire parallèle à la tranche 10, de largeur Wo de 5cm et de longueur Lo 10cm. Il y a quatre diodes 4 en rangée.

La zone débouchante 34 comporte sur la face avant 32 deux bandes à pistes 341 et 342 avec les pistes électriques 33 par exemple de 1mm et en cuivre. Chaque bandes à pistes est repliée sur la face F4 14 (face avant 32 côté face F3, F4) et est lié à un connecteur individuel 7 (ou en variante commun). La zone courbée est en retrait de la tranche 10 du premier vitrage.

La figure 2b diffère de la figure 2a en ce que le deuxième vitrage présente une encoche 15' par exemple de 2mm dans laquelle les bandes à pistes 341 et 342 sont courbées. Le PVB 2 en retrait de la deuxième tranche 10' peut être présent dans l'encoche 15'.

Les figures 4i à 4m montrent en vue de face des vitrages internes 1' avec leur couche interne de masquage formant un cadre de masquage 6' en émail (sur la face 14 dite F4) et les figures 4'i à 4'm montrent en vue de face des vitrages externes 1 avec leur couche externe de masquage sur la face 12 dite F2 formant un cadre de masquage 6 en émail masquant les supports de diodes 3.

Le bord interne 60' de la couche 6' peut avoir une transition par dégradé de motifs vers le centre du vitrage. La couche 60' a des épargnes communes ou individuelles 61, 62' pour laisser passer la lumière des diodes dans la zone à diodes 30 tout en masquant les trois bandes à pistes 341,342, 343 par exemple le long du bord longitudinal inférieur ou même dans une zone plus épaisse centrale du bord longitudinal inférieur (emplacement d'un rétroviseur etc).

Les figures 4'm à 4'n montrent en vue de face des vitrages externes 1 avec leur couche externe de masquage sur la face 12 dite F2 formant un cadre de masquage 6 en émail masquant les bandes à pistes 34. La zone à diode est dans le clair de vitre à proximité et de préférence le support et des pistes électriques sont transparentes.

Les figures 4m à 4n montrent en vue de face des vitrages internes 1' avec leur couche interne de masquage formant un cadre de masquage 6' en émail (sur la face 14 dite F4) ou même sans cadre de masquage (figure 4n).

Les figures 6, 7, 8, 9, 10, 11,12 montrent chacune une vue schématique partielle de face d'un vitrage feuilleté bombé de véhicule à zone lumineuse interne dans un mode de réalisation de l'invention. Les couches de masquages sur les vitrages ne sont pas représentées pour voir les éléments et ici les supports ne sont pas montrés repliés.

Dans les figures 6 à 8, la zone à diodes 30 est une bande rectangulaire parallèle à la tranche 10, de largeur Wo de 5cm et de longueur Lo de plus de 12cm. Il y a deux rangées de douze diodes 4.

La zone débouchante 34 de la tranche 10 comporte trois bandes à pistes 341 à 343 de largeur 4cm espacées de 1cm. L'espace interbandes 351 et 352 est rempli de PVB. Les faces arrières des bandes à pistes sont collées à la face F2 par des bandes adhésives double face 811, 812, 813 individuelles ou par une bande commune 811, pour l'étanchéité.

Pour un bon positionnement, on place une ou des bandes adhésives double face 821, 822, 823 sur la face avant 32, d'épaisseur d'au plus 0,2mm, par exemple transparentes de part et d'autre des rangées de diodes ou sous la rangée la plus interne ou sur les bandes à pistes. On peut choisir par exemple le produit 9496LE Clear 3M de la société 3M.

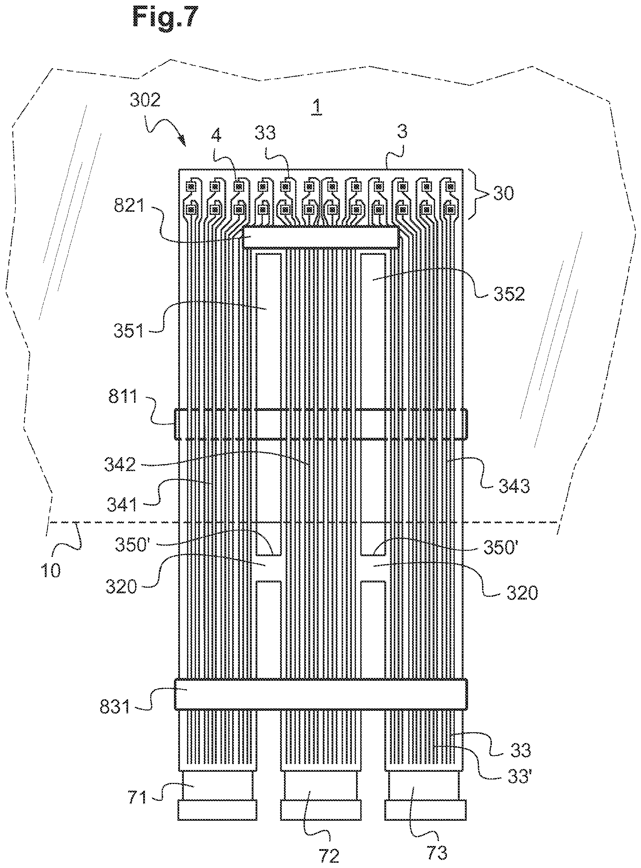

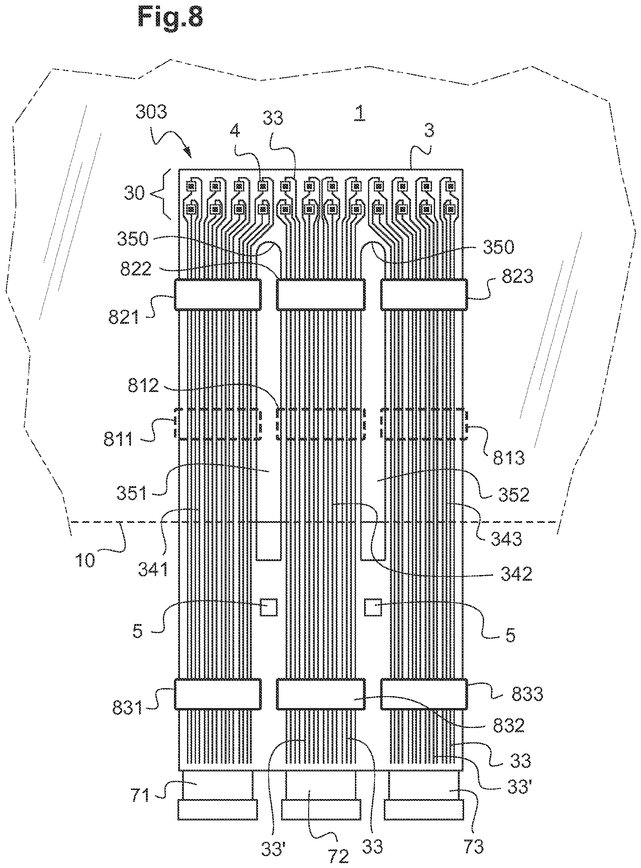

Les bandes à pistes sont dans la zone dépassante avec la même largeur Wi. et sont parfois reliées (figures 7 et 8) sur une largeur D d'au moins 0,5cm et de préférence redéployées en bandes (figure 7) jusqu'à une partie terminale du support à diodes menant aux connecteurs 71, 72, 73.

Les bandes à pistes peuvent avoir dans la zone débouchante sur la face avant une bande adhésive double face commune ou individuelle 831, 832, 833. Le support 301 à 303 peut porter d'autres composants 5.

La tranche de la zone à diodes 30 définit des zones dite de liaison 350 entre bandes à pistes voisines droites (figure 6) ou encore en arc (figure 8).

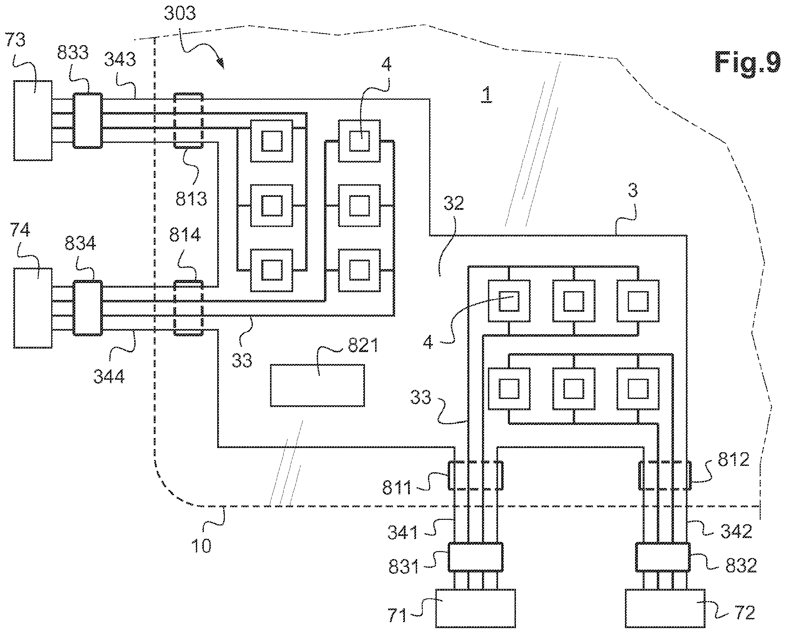

Dans la figure 9, le support 303 en L et comporte deux zones à diodes avec chacune deux bandes à pistes débouchantes 341 à 344 sur des tranches adjacentes du deuxième vitrage 1'. La bande adhésive 821 d'alignement est entre les zones à diodes

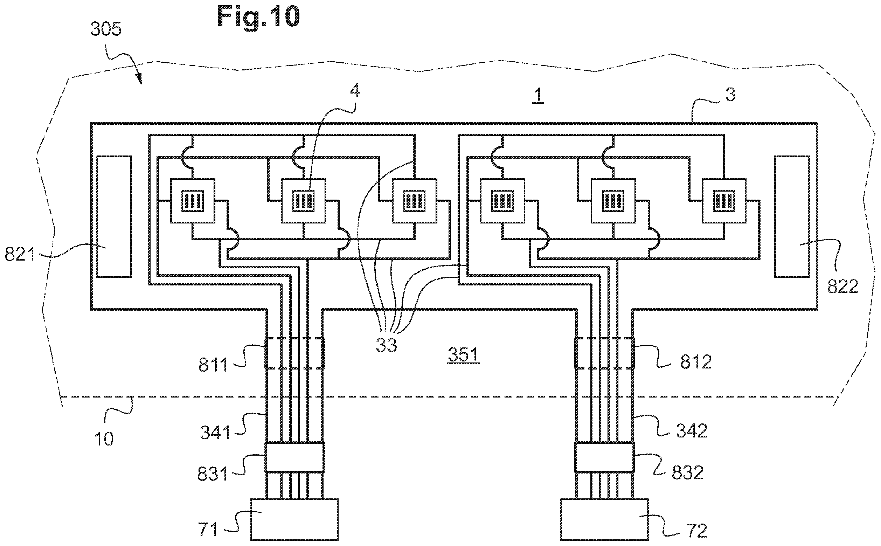

Dans la figure 10, les diodes 4 sont polychromatiques ce qui implique plus de pistes électriques 33 (quatre par diode) sur le support 305.

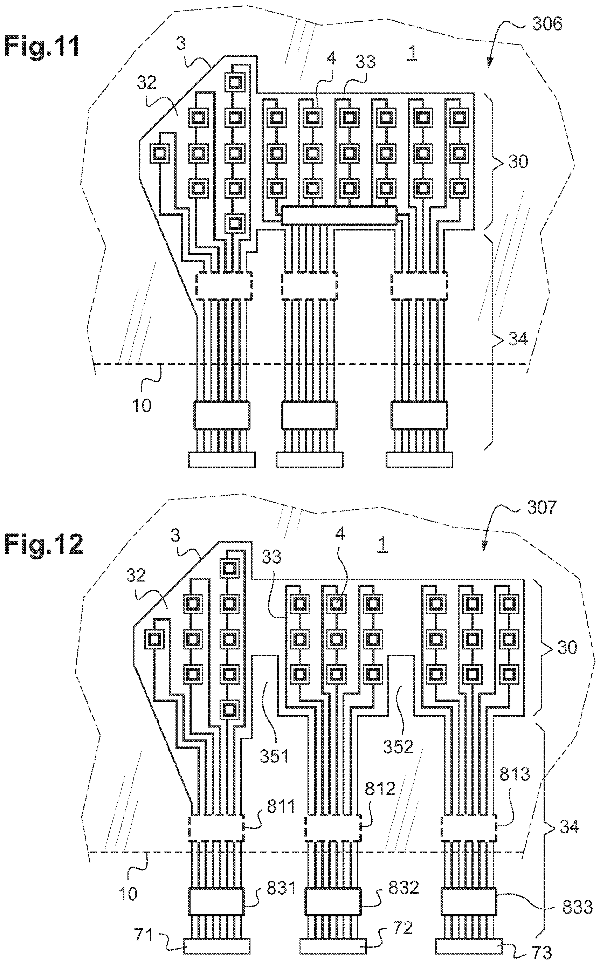

Dans les figures 11 et 12 les diodes 4 forment un motif lumineux à savoir une flèche tout comme la zone à diodes 30 des supports 306, 307. On peut prévoir des découpes 351,352 (droites, en arc etc) entre les rangées de diodes.

La figure 13 montre une vue schématique côté face F1 d'un toit vitré feuilleté bombé 2000 monté sur un véhicule automobile, toit avec deux zones lumineuses internes dans un mode de réalisation de l'invention à proximité du bord 60' du cadre émail 6'.

Dans chaque zone, les diodes 4 forment un motif lumineux 308, 308' à savoir un cercle tout comme la zone à diodes 30 du support 308, 308'. La zone débouchante comporte deux bandes à pistes 341,342 avec un espace 351 entre elles.

La figure 14 est une vue schématique de face (côté face F1 ou face 11) d'une lunette arrière à signalisation lumineuse externe 3000 dans un mode de réalisation de l'invention.

Dans la zone centrale 18, on forme un troisième feu stop 101 par exemple des diodes rouges le long du bord longitudinal supérieur et sur le support des diodes 309 (à trois bandes à pistes 341 à 343).

Dans chaque zone latérale 17 et 19, on forme un clignotant avec par exemple des diodes le long du bord latéral en jeu, émettant dans le jaune, sur le support des diodes 310 (à trois bandes à pistes 341 à 343, ou encore un feu de signalisation avec par exemple des diodes le long du bord longitudinal inférieur en jeu sur le support des diodes 311 (à trois bandes à pistes 341 à 343).

Alternativement, on forme un répétiteur de clignotant sur un vitrage latéral de la même façon.

La figure 15 est une vue schématique éclaté d'un vitrage feuilleté bombé de véhicule dans un mode de réalisation de l'invention montrant l'utilisation d'un PVB 2 avec des trous traversants 23 pour loger les diodes 4 sur le support 3 côté face 12 (face arrière 31 collée par une bande adhésive 811) avant le feuilletage des deux verres 1, 1'. On replie la partie dépassant 341 du support 3 sur la face 14 en la collant par une bande adhésive 831 sur la face avant 32.

## Revendications

1. Vitrage de véhicule à zone lumineuse interne (100, 200, 300) comprenant :
- un vitrage feuilleté bombé comportant :
- un premier vitrage (1), qui est une feuille de verre formant vitrage extérieur, avec des première et deuxième faces principales (11, 12) respectivement dites face F1 et face F2 et une première tranche (10)
- un deuxième vitrage (1'), qui est une feuille de verre formant vitrage intérieur, avec des troisième et quatrième faces principales (13, 14) respectivement dites face F3 et face F4 et une deuxième tranche (10') du côté de la première tranche éventuellement en retrait de la première tranche
- et entre la face F2 et la face F3 qui sont les faces internes du vitrage feuilleté, un intercalaire de feuilletage (2) en matière polymérique thermoplastique ayant une face principale F'2 (21) en contact adhésif avec la face F2 et une face principale F'3 (22) en contact adhésif avec la face F3 et une tranche du côté des première et deuxième tranches, dite autre tranche (20),
- entre les faces F2 et F3, des diodes électroluminescentes inorganiques (4), chaque diode ayant une face émettrice de lumière en regard de la face F3 apte à émettre une lumière en direction de la face F3
- un support des diodes (3) ayant une face principale dite face avant (32) en regard de la face F3 et une face principale dite face arrière (31) en regard de la face F2, les diodes étant montées sur la face avant (32),
le support des diodes étant flexible comportant sur la face avant des zones électroconductrices d'alimentation électrique, dites pistes électriques (33), une partie ou toutes les pistes électriques alimentant les diodes, et l'intercalaire de feuilletage est présent entre la face avant et la face F3, le support de diodes étant d'épaisseur E3 submillimétrique comportant :
- entre les faces F2 et F3 une zone dite à diodes (30), comportant lesdites diodes le long de la première tranche définie par une longueur L0 d'au moins 6cm le long de la première tranche,
- une zone d'alimentation électrique débouchante (34) prolongeant la zone à diodes et s'étendant en direction de la première tranche (10) et débouchant de l'autre tranche (20), comportant une zone d'alimentation dite zone interne, avec les pistes électriques, entre les faces F2 et F3 définie par une largeur Wt inférieure à L0, zone interne prolongée par une zone d'alimentation au-delà de l'autre tranche dite zone dépassante,
et le vitrage feuilleté bombé comporte un adhésif étanche à l'eau liquide (81, 811 à 813), positionné entre la face F2 et la face arrière dans une partie de la face arrière, d'épaisseur E8 submillimétrique
**caractérisé en ce que** la largeur totale Wt est d'au moins 5cm, la zone interne est divisée en une pluralité de bandes dites à pistes (341 à 344), porteuses des pistes électriques, de largeur individuelle Wi inférieure à 5cm dans la zone interne, bandes à pistes débouchantes de l'autre tranche,
et **en ce que** dans la zone interne, l'intercalaire de feuilletage est présent dans l'espace dit espace interbande (351, 352) entre bandes à pistes voisines.

2. Vitrage de véhicule à signalisation lumineuse externe (200', 3000) comprenant :
- un vitrage feuilleté bombé comportant :
- un premier vitrage (1), qui est une feuille de verre formant vitrage extérieur, avec des première et deuxième faces principales (11, 12) respectivement dites face F1 et face F2 et une première tranche (10)
- un deuxième vitrage (1'), qui est une feuille de verre formant vitrage intérieur, avec des troisième et quatrième faces principales (13, 14) respectivement dites face F3 et face F4 et une deuxième tranche (10') du côté de la première tranche éventuellement en retrait de la première tranche
et entre la face F2 et la face F3 qui sont les faces internes du vitrage feuilleté, un intercalaire de feuilletage (2) en matière polymérique thermoplastique ayant une face principale F'2 en contact adhésif avec la face F2 et une face principale F'3 en contact adhésif avec la face F3 et une tranche du côté des première et deuxième tranches, dite autre tranche (20),
- entre les faces F2 et F3, des diodes électroluminescentes inorganiques (4), chaque diode ayant une face émettrice de lumière en regard de la face F2 apte à émettre une lumière en direction de la face F2,
- un support des diodes (3) ayant une face principale dite avant en regard de la face F2 et une face principale dite arrière en regard de la face F3, les diodes étant montées sur la face avant,
le support des diodes étant flexible comportant sur la face avant des zones électroconductrices d'alimentation électrique, dites pistes électriques, une partie ou toutes les pistes électriques alimentant les diodes, l'intercalaire de feuilletage est présent entre la face avant et la face F2, le support des diodes, d'épaisseur E3 submillimétrique, comportant :
- entre les faces F2 et F3 une zone dite à diodes (30) comportant lesdites diodes le long de la deuxième tranche définie par une longueur L0 d'au moins 6cm le long de la deuxième tranche,
- une zone d'alimentation électrique débouchante prolongeant la zone à diodes et s'étendant en direction de la deuxième tranche et débouchant de l'autre tranche comportant une zone d'alimentation dite zone interne, avec les pistes électriques, entre les faces F2 et F3 définie par une largeur Wt inférieure à L0, zone interne prolongée par une zone d'alimentation au-delà de l'autre tranche dite zone dépassante,
et le vitrage feuilleté bombé comporte un adhésif étanche à l'eau liquide (81) positionné entre la face arrière et la face F3 dans une région de la face arrière, d'épaisseur E8 submillimétrique,
**caractérisé en ce que** la largeur totale Wt est d'au moins 5cm, la zone débouchante est divisée en une pluralité de bandes dite à pistes, porteuses des pistes électriques, de largeur individuelle Wi inférieure à 5cm dans la zone interne, bandes débouchantes de l'autre tranche.
et **en ce que** dans la zone interne, l'intercalaire de feuilletage est présent dans l'espace, dit espace interbandes, entre bandes à pistes voisines.

3. Vitrage de véhicule selon l'une des revendications précédentes **caractérisé en ce que** l'espace dit interbande (351, 352) entre deux bandes à pistes voisines (341 à 344) est de largeur W_{E} d'au moins 5mm et même d'au plus 20cm.

4. Vitrage de véhicule selon l'une des revendications précédentes **caractérisé en ce que** les bandes à pistes (341 à 344) sont prolongées dans la zone dépassante notamment avec la même largeur Wi et sont reliées sur une largeur D d'au moins 0,5cm et de préférence redéployées en bandes jusqu'à une partie terminale du support à diodes (3).

5. Vitrage de véhicule selon l'une des revendications précédentes **caractérisé en ce que** la tranche de la zone à diodes (30) définit des zones dite de liaison (350) entre bandes à pistes voisines (341 à 344) en arc ou encore qui présente un chanfrein, un congé.

6. Vitrage de véhicule selon l'une des revendications précédentes **caractérisé en ce que** ledit adhésif étanche à l'eau liquide (81) est une bande adhésive double face commune aux bandes à pistes (341 à 344) ou qui forme un ensemble de bandes adhésives double face individuelles (811 à 813), espacées en elles, chaque bande à pistes ayant une bande adhésive individuelle.

7. Vitrage de véhicule selon l'une des revendications précédentes **caractérisé en ce que** la face avant (32) comporte une ou plusieurs bandes adhésives double face (821, 822), dite bande(s) d'alignement, décalée(s) des diodes (4) et même de préférence décalée(s) dudit adhésif étanche à l'eau liquide (81, 811 à 813), d'épaisseur E'8 submillimétrique, et en contact avec l'intercalaire de feuilletage (3).

8. Vitrage de véhicule selon l'une des revendications précédentes **caractérisé en ce que** dans la zone dépassante, le support des diodes (3) est courbé avec une partie terminale dans une zone en périphérie de la face F4 (14), collée avec une bande adhésive double face dite bande externe (83, 831 à 833), la bande externe, en une ou plusieurs bandes, est sur la face avant (32) du support des diodes pour le vitrage à zone lumineuse interne ou la bande externe est sur la face arrière (31) du support des diodes pour le vitrage à signalisation extérieure et **en ce que** de préférence pour le vitrage à zone lumineuse interne, la zone de la face arrière (31) pour le collage d'un cadre métallique (9) est au moins en partie en regard de la zone de la bande externe (83) en face avant (32) ou pour le vitrage à signalisation extérieure, la zone de la face avant (32) pour le collage d'un cadre métallique (9) est au moins en partie en regard de la zone de la bande externe en face avant.

9. Vitrage de véhicule selon l'une des revendications précédentes **caractérisé en ce que**, dans la zone à diodes (30) et/ou dans la zone interne, le support des diodes comporte sur la face avant un autre ou des autres composants électroniques (5) d'épaisseur E5 submillimétrique choisis parmi l'un au moins des éléments suivants: un élément résistif, un élément capacitif, un transistor, un microcontrôleur.

10. Vitrage de véhicule selon l'une des revendications précédentes **caractérisé en ce que** pour le vitrage à zone lumineuse interne, la distance H entre la face émettrice des diodes (4) et la face F3 est de préférence non nulle et de préférence d'au plus 0,5mm et même allant de 0,1 à 0,3mm ou **en ce que** pour le vitrage à signalisation lumineuse externe, la distance H entre la face émettrice des diodes et la face F2 est de préférence non nulle et de préférence d'au plus 0,5mm et même allant de 0,1 à 0,3mm.

11. Vitrage de véhicule selon l'une quelconque des revendications précédentes **caractérisé en ce que** les bandes à pistes (811 à 813) sont masquées de l'intérieur par une couche de masquage (6') de préférence sur la face F4 ou F3 et/ou de l'extérieur par une couche de masquage(6) de préférence sur la face F2, de préférence en émail.

12. Vitrage de véhicule selon l'une des revendications précédentes **caractérisé en ce que**, pour le vitrage à zone lumineuse interne, la zone à diodes (30) est en regard d'un épargne (61) d'une couche de masquage (6), de préférence en émail, de préférence sur la face F4 ou F3, épargne commune aux diodes ou en plusieurs épargnes individuelles pour les diodes, ou **en ce que** pour le vitrage à signalisation lumineuse externe, la zone à diodes est en regard d'une épargne d'une couche de masquage de préférence sur la face F2, de préférence en émail, épargne commune aux diodes ou en plusieurs épargnes individuelles pour les diodes.

13. Vitrage de véhicule selon l'une quelconque des revendications précédentes **caractérisé en ce que** l'intercalaire de feuilletage (2) est en en poly(vinyl butyral) (PVB) notamment avec une épaisseur E2 d'au plus 0,9mm, les diodes (4) sont d'épaisseur E4 inférieure à E2 de préférence d'au plus 0,8mm, et même le support des diodes est d'épaisseur E3 d'au plus 0,2mm.

14. Vitrage de véhicule selon l'une des revendications précédentes **caractérisé en ce que** l'intercalaire de feuilletage (2) est en poly(vinyl butyral) (PVB), éventuellement acoustique et/ou en coin notamment pour un pare-brise, ou encore un élément composite PVB/film plastique transparent fonctionnel/PVB, le film plastique fonctionnel, de préférence un PET, étant de préférence porteur d'une couche fonctionnelle notamment électroconductrice.

15. Véhicule comportant au moins un vitrage de véhicule selon l'une quelconque des revendications précédentes **caractérisé en ce que** le vitrage à zone lumineuse interne formant pare-brise, la lumière des diodes est un moyen anti-collision ou le vitrage de signalisation lumineuse externe formant la lunette arrière est un vitrage incluant un feu-stop, un troisième feu stop, ou le vitrage de signalisation lumineuse externe formant vitrage latérale est un vitrage incluant un feu de détresse ou un feu de repérage du véhicule ou un répétiteur de clignotant.

## Patentansprüche

1. Fahrzeugverglasung mit interner Lichtzone (100, 200, 300), umfassend:
- eine gebogene Verbundverglasung, umfassend:
- eine erste Verglasung (1), bei der es sich um eine Glasscheibe handelt, welche die Außenverglasung bildet, mit ersten und zweiten Hauptflächen (11, 12), die jeweils als Fläche F1 und Fläche F2 bezeichnet werden, und einer ersten Kante (10)
- eine zweite Verglasung (1'), bei der es sich um eine Glasscheibe handelt, die eine Innenverglasung bildet, mit dritten und vierten Hauptflächen (13, 14), die als Fläche F3 bzw. Fläche F4 bezeichnet werden, und einer zweiten Kante (10') auf der Seite der ersten Kante, die gegebenenfalls von der ersten Kante zurückgesetzt ist
- und zwischen der Fläche F2 und der Fläche F3, bei denen es sich um die Innenflächen der Verbundverglasung handelt, eine Verbundzwischenschicht (2) aus thermoplastischem Polymermaterial mit einer Hauptfläche F'2 (21), die in Haftkontakt mit der Fläche F2 steht, und einer Hauptfläche F'3 (22), die in Haftkontakt mit der Fläche F3 steht, und einer Kante der Seite der ersten und der zweiten Kante, die als die andere Kante (20) bezeichnet wird,
- zwischen den Flächen F2 und F3 anorganische Leuchtdioden (4), wobei jede Diode eine der Fläche F3 zugewandte lichtemittierende Fläche aufweist, die in der Lage ist, Licht in Richtung der Fläche F3 zu emittieren
- einen Diodenträger (3), der eine als Vorderseite (32) bezeichnete Hauptfläche gegenüber der Fläche F3 und eine als Rückseite (31) bezeichnete Hauptfläche gegenüber der Fläche F2 aufweist, wobei die Dioden auf der Vorderseite (32) montiert sind,
wobei der Diodenträger anpassungsfähig ist und auf der Vorderseite elektrisch leitende Zonen zur Stromversorgung, sogenannte elektrische Bahnen (33), aufweist, wobei einige oder alle elektrischen Bahnen die Dioden versorgen, und die Verbundzwischenschicht zwischen der Vorderseite und der Fläche F3 vorhanden ist, wobei der Diodenträger eine Dicke E3 im Submillimeterbereich aufweist, umfassend:
- zwischen den Flächen F2 und F3 eine sogenannte Diodenzone (30), welche die Dioden entlang der ersten Kante umfasst, die durch eine Länge L0 von mindestens 6 cm entlang der ersten Kante definiert ist,
- eine entlang der Diodenzone ausmündende Stromversorgungszone (34), die sich in Richtung der ersten Kante (10) erstreckt und aus der anderen Kante (20) ausmündet, die eine als Innenbereich bezeichnete Versorgungszone umfasst, mit elektrischen Bahnen zwischen den Flächen F2 und F3, die durch eine Breite Wt kleiner als L0 definiert sind, wobei der Innenbereich durch eine als vorstehenden Bereich bezeichnete Versorgungszone über die andere Kante hinaus verlängert ist,
und die gebogene Verbundverglasung einen wasserfesten Klebstoff (81, 811 bis 813), der zwischen der Fläche F2 und der Rückseite in einem Teil der Rückseite angeordnet ist, mit einer Dicke E8 im Submillimeterbereich umfasst
**dadurch gekennzeichnet, dass** die Gesamtbreite Wt mindestens 5 cm beträgt, der Innenbereich in eine Vielzahl von sogenannten Bahnstreifen (341 bis 344) unterteilt ist, welche die elektrischen Bahnen tragen, mit einer individuellen Breite Wi von weniger als 5 cm in dem Innenbereich, wobei die Bahnstreifen aus der anderen Kante ausmünden,
und dass in dem Innenbereich die Verbundzwischenschicht in dem Raum, der als Zwischenstreifenraum (351, 352) bezeichnet wird, zwischen benachbarten Bahnstreifen vorhanden ist.

2. Fahrzeugverglasung mit externer Lichtsignalisierung (200', 3000), umfassend:
- eine gebogene Verbundverglasung, umfassend:
- eine erste Verglasung (1), bei der es sich um eine Glasscheibe handelt, welche die Außenverglasung bildet, mit ersten und zweiten Hauptflächen (11, 12), die jeweils als Fläche F1 und Fläche F2 bezeichnet werden, und einer ersten Kante (10)
- eine zweite Verglasung (1'), bei der es sich um eine Glasscheibe handelt, die eine Innenverglasung bildet, mit dritten und vierten Hauptflächen (13, 14), die als Fläche F3 bzw. Fläche F4 bezeichnet werden, und einer zweiten Kante (10') auf der Seite der ersten Kante, die gegebenenfalls von der ersten Kante zurückgesetzt ist
und zwischen der Fläche F2 und der Fläche F3, bei denen es sich um die Innenflächen der Verbundverglasung handelt, eine Verbundzwischenschicht (2) aus thermoplastischem Polymermaterial mit einer Hauptfläche F'2, die in Haftkontakt mit der Fläche F2 steht, und einer Hauptfläche F'3, die in Haftkontakt mit der Fläche F3 steht, und einer Kante auf der Seite der ersten und der zweiten Kante, die als die andere Kante (20) bezeichnet wird,
- zwischen den Flächen F2 und F3 anorganische Leuchtdioden (4), wobei jede Diode eine der Fläche F2 zugewandte lichtemittierende Fläche aufweist, die in der Lage ist, Licht in Richtung der Fläche F2 zu emittieren,
- einen Diodenträger (3), der eine als Vorderseite bezeichnete Hauptfläche gegenüber der Fläche F2 und eine als Rückseite bezeichnete Hauptfläche gegenüber der Fläche F3 aufweist, wobei die Dioden auf der Vorderseite montiert sind,
wobei der Diodenträger anpassungsfähig ist und auf der Vorderseite elektrisch leitende Zonen zur Stromversorgung, sogenannte elektrische Bahnen, aufweist, wobei einige oder alle elektrischen Bahnen die Dioden versorgen, die Verbundzwischenschicht zwischen der Vorderseite und der Fläche F2 vorhanden ist, wobei der Diodenträger eine Dicke E3 im Submillimeterbereich aufweist, umfassend:
- zwischen den Flächen F2 und F3 eine sogenannte Diodenzone (30), welche die Dioden entlang der zweiten Kante umfasst, die durch eine Länge L0 von mindestens 6 cm entlang der zweiten Kante definiert ist,
- eine Stromversorgungszone, die entlang der Diodenzone ausmündet, und sich in Richtung der zweiten Kante erstreckt und aus der anderen Kante ausmündet, die eine als Innenbereich bezeichnete Versorgungszone umfasst, mit elektrischen Bahnen zwischen den Flächen F2 und F3, die durch eine Breite Wt kleiner als L0 definiert sind, wobei der Innenbereich durch eine als vorstehenden Bereich bezeichnete Versorgungszone über die andere Kante hinaus verlängert ist,
und die gebogene Verbundverglasung einen wasserfesten Klebstoff (81), der zwischen der Rückseite und der Fläche F3 in einem Bereich der Rückseite angeordnet ist, mit einer Dicke E8 im Submillimeterbereich umfasst,
**dadurch gekennzeichnet, dass** die Gesamtbreite Wt mindestens 5 cm beträgt, die ausmündende Zone in eine Vielzahl von sogenannten Bahnstreifen unterteilt ist, welche die elektrischen Bahnen tragen, mit einer individuellen Breite Wi von weniger als 5 cm in dem Innenbereich, wobei die Streifen aus der anderen Kante ausmünden.
und dass in dem Innenbereich die Verbundzwischenschicht in dem Raum, der als Zwischenstreifenraum zwischen benachbarten Bahnstreifen bezeichnet wird, vorhanden ist.

3. Fahrzeugverglasung nach einem der vorstehenden Ansprüche **dadurch gekennzeichnet, dass** der sogenannte Zwischenstreifenraum (351, 352) zwischen zwei benachbarten Bahnstreifen (341 bis 344) eine Breite W_{E} von mindestens 5 mm und sogar höchstens 20 cm beträgt.

4. Fahrzeugverglasung nach einem der vorstehenden Ansprüche **dadurch gekennzeichnet, dass** die Bahnstreifen (341 bis 344) in dem vorstehenden Bereich insbesondere mit der gleichen Breite Wi, verlängert sind und über eine Breite D von mindestens 0,5 cm verbunden und vorzugsweise bis zu einem Endteil des Diodenträgers (3) streifenförmig umgelegt sind.

5. Fahrzeugverglasung nach einem der vorstehenden Ansprüche, **dadurch gekennzeichnet, dass** die Kante der Diodenzone (30) sogenannte Verbindungszonen (350) zwischen benachbarten bogenförmigen Streifenbahnen (341 bis 344) definiert oder die eine Fase, eine Auskehlung aufweist.

6. Fahrzeugverglasung nach einem der vorstehenden Ansprüche, **dadurch gekennzeichnet, dass** der wasserfeste Klebstoff (81) ein doppelseitiges Klebeband ist, das den Streifenbahnen (341 bis 344) gemeinsam ist oder das einen Satz einzelner doppelseitiger Klebebänder (811 bis 813) bildet, die auseinandergesetzt sind, wobei jeder Bahnstreifen ein einzelnes Klebeband aufweist.

7. Fahrzeugverglasung nach einem der vorstehenden Ansprüche, **dadurch gekennzeichnet, dass** die Vorderseite (32) ein oder mehrere doppelseitige Klebebänder (821, 822), sogenannte Ausrichtungsbänder bzw. ein Ausrichtungsband, umfasst, die von den Dioden (4) versetzt sind und sogar vorzugsweise von dem wasserfesten Klebstoff (81, 811 bis 813) mit einer Dicke E'8 im Submillimeterbereich und in Kontakt mit der Verbundzwischenschicht (3) versetzt sind.

8. Fahrzeugverglasung nach einem der vorstehenden Ansprüche, **dadurch gekennzeichnet, dass** in der vorstehenden Zone der Diodenträger (3) mit einem Endteil in einem Bereich am Umfang der Fläche F4 (14) gekrümmt ist, die mit einem doppelseitigen Klebeband, einem sogenannten externen Band (83, 831 bis 833), verklebt ist, wobei sich das externe Band in einem oder mehreren Streifen auf der Vorderseite (32) des Diodenträgers für die Verglasung mit interner Lichtzone oder das externe Band auf der Rückseite (31) des Diodenträgers für die Verglasung mit externer Signalisierung befindet, und dass vorzugsweise für die Verglasung mit interner Lichtzone sich der Bereich der Rückseite (31) für die Verklebung eines Metallrahmens (9) zumindest teilweise gegenüber des Bereichs des externen Bandes (83) auf der Vorderseite (32) befindet oder für eine Verglasung mit externer Signalisierung sich der Bereich der Vorderseite (32) für die Verklebung eines Metallrahmens (9) zumindest teilweise gegenüber des Bereichs des externen Bandes auf der Vorderseite befindet.

9. Fahrzeugverglasung nach einem der vorstehenden Ansprüche, **dadurch gekennzeichnet, dass** der Diodenträger in der Diodenzone (30) und/oder in dem Innenbereich auf der Vorderseite ein anderes oder andere elektronische Bauteile (5) mit einer Dicke E5 im Submillimeterbereich umfasst, die aus mindestens einem der folgenden Elemente ausgewählt sind: einem Widerstandselement, einem kapazitiven Element, einem Transistor, einem Mikrocontroller.

10. Fahrzeugverglasung nach einem der vorstehenden Ansprüche, **dadurch gekennzeichnet, dass** für die Verglasung mit interner Lichtzone der Abstand H zwischen der emittierenden Fläche der Dioden (4) und der Fläche F3 vorzugsweise nicht Null und vorzugsweise höchstens 0,5 mm ist, und sogar zwischen 0,1 und 0,3 mm beträgt, oder **dass** für die Verglasung mit externer Lichtsignalisierung der Abstand H zwischen der emittierenden Fläche der Dioden und der Fläche F2 vorzugsweise nicht Null und vorzugsweise höchstens 0,5 mm ist und sogar zwischen 0,1 und 0,3 mm beträgt.

11. Fahrzeugverglasung nach einem der vorstehenden Ansprüche, **dadurch gekennzeichnet, dass** die Streifenbahnen (811 bis 813) von innen durch eine Maskierungsschicht (6') vorzugsweise auf der Fläche F4 oder F3 und/oder von außen durch eine Maskierungsschicht (6) vorzugsweise auf der Fläche F2, vorzugsweise aus Email, maskiert sind.

12. Fahrzeugverglasung nach einem der vorstehenden Ansprüche, **dadurch gekennzeichnet, dass** für die Verglasung mit interner Lichtzone sich die Diodenzone (30) gegenüber einer Aussparung (61) einer Maskierungsschicht (6), vorzugsweise aus Email, vorzugsweise auf der Fläche F4 oder F3, einer mit den Dioden gemeinsamen Aussparung oder mehreren einzelnen Aussparungen für die Dioden befindet, oder **dass** für die Verglasung mit externer Lichtsignalisierung sich die Diodenzone gegenüber einer Aussparung einer Maskierungsschicht, vorzugsweise auf der Fläche F2, vorzugsweise aus Email, einer mit den Dioden gemeinsamen Aussparung oder mehreren einzelnen Aussparungen für die Dioden befindet.

13. Fahrzeugverglasung nach einem der vorstehenden Ansprüche, **dadurch gekennzeichnet, dass** die Verbundzwischenschicht (2) aus Poly(vinylbutyral) (PVB), insbesondere mit einer Dicke E2 von höchstens 0,9 mm, besteht, die Dioden (4) eine Dicke E4 von weniger als E2, vorzugsweise von höchstens 0,8 mm, aufweisen, und sogar der Träger der Dioden eine Dicke E3 von höchstens 0,2 mm aufweist.

14. Fahrzeugverglasung nach einem der vorstehenden Ansprüche, **dadurch gekennzeichnet, dass** die Verbundzwischenschicht (2) aus Poly(vinylbutyral) (PVB), gegebenenfalls akustisch und/oder keilförmig, insbesondere für eine Windschutzscheibe, oder aus einem Verbund aus PVB/transparenter funktioneller Kunststofffolie/PVB besteht, wobei die funktionelle Kunststofffolie, vorzugsweise ein PET, vorzugsweise eine Funktionsschicht, insbesondere eine elektrisch leitende Schicht, trägt.

15. Fahrzeug, das mindestens eine Fahrzeugverglasung nach einem der vorstehenden Ansprüche umfasst, **dadurch gekennzeichnet, dass** die Verglasung mit interner Lichtzone die Windschutzscheibe bildet, das Licht der Dioden ein Kollisionsvermeidungsmittel ist, oder die Verglasung mit externer Lichtsignalisierung, welche die Heckscheibe bildet, eine Verglasung ist, die eine Bremsleuchte oder eine dritte Bremsleuchte einschließt, oder die Verglasung mit externer Lichtsignalisierung, welche die Seitenscheibe bildet, eine Verglasung ist, die ein Warnblinklicht oder ein Positionslicht des Fahrzeugs oder eine Zusatzblinkleuchte einschließt.

## Claims

1. A vehicle glazing having an internal luminous zone (100, 200, 300) comprising:
- a bent laminated glazing comprising:
- a first glazing (1), which is a glass sheet forming an exterior glazing, with first and second main faces (11, 12) respectively "face F1" and "face F2" and a first edge face (10),
- a second glazing (1'), which is a glass sheet forming an interior glazing, with third and fourth main faces (13, 14) respectively "face F3" and "face F4" and a second edge face (10') by the first edge face optionally set back from the first edge face,
- and, between the face F2 and the face F3, which are the internal faces of the laminated glazing, a lamination interlayer (2) made of thermoplastic polymeric material having a main face F'2 (21) in adhesive contact with the face F2 and a main face F'3 (22) in adhesive contact with the face F3 and an edge face by the first and second edge faces, "other edge face" (20),
- between the faces F2 and F3, inorganic light-emitting diodes (4), each diode having a light-emitting face facing the face F3 capable of emitting light in the direction of the face F3,
- a carrier for the diodes (3) having a main face, "front face", (32) facing the face F3 and a main face, "rear face", (31) facing the face F2, the diodes being mounted on the front face (32),
the carrier for the diodes being flexible, comprising, on the front face, electrically conductive zones for supplying electricity, "electrical tracks", (33), a portion or all of the electrical tracks supplying the diodes, and the lamination interlayer is present between the front face and the face F3, the carrier for the diodes being of submillimetric thickness E3, comprising:
- between the faces F2 and F3, a "diode" zone (30), comprising said diodes along the first edge face defined by a length L0 of at least 6 cm along the first edge face,
- an emerging electrical supply zone (34), prolonging the diode zone and extending in the direction of the first edge face (10) and emerging from the other edge face (20), comprising a supply zone, "internal zone", with the electrical tracks, between the faces F2 and F3, defined by a width Wt which is less than L0, which internal zone is prolonged by a supply zone beyond the other edge face, "protruding zone",
and the bent laminated glazing comprises an adhesive leaktight to liquid water (81, 811 to 813), positioned between the face F2 and the rear face in a portion of the rear face, of submillimetric thickness E8,
**characterized in that** the total width Wt is at least 5 cm, the internal zone is divided into a plurality of "track" strips (341 to 344) carrying electrical tracks, with an individual width Wi of less than 5 cm in the internal zone, emerging track strips of the other edge face,
and **in that**, in the internal zone, the lamination interlayer is present in the space, "interstrip space", (351, 352) between neighboring track strips.

2. A vehicle glazing having external luminous signaling (200', 3000) comprising:
- a bent laminated glazing comprising:
- a first glazing (1), which is a glass sheet forming an exterior glazing, with first and second main faces (11, 12) respectively "face F1" and "face F2" and a first edge face (10),
- a second glazing (1'), which is a glass sheet forming an interior glazing, with third and fourth main faces (13, 14) respectively "face F3" and "face F4" and a second edge face (10') by the first edge face optionally set back from the first edge face,
and, between the face F2 and the face F3, which are the internal faces of the laminated glazing, a lamination interlayer (2) made of thermoplastic polymeric material having a main face F'2 in adhesive contact with the face F2 and a main face F'3 in adhesive contact with the face F3 and an edge face by the first and second edge faces, "other edge face" (20),
- between the faces F2 and F3, inorganic light-emitting diodes (4), each diode having a light-emitting face facing the face F2 capable of emitting light in the direction of the face F2,
- a carrier for the diodes (3) having a main face, "front face", facing the face F2 and a main face, "rear face", facing the face F3, the diodes being mounted on the front face,
the carrier for the diodes being flexible, comprising, on the front face, electrically conductive zones for supplying electricity, "electrical tracks", a portion or all of the electrical tracks supplying the diodes, the lamination interlayer is present between the front face and the face F2, the carrier for the diodes, which is of submillimetric thickness E3, comprising:
- between the faces F2 and F3, a "diode" zone (30), comprising said diodes along the second edge face defined by a length L0 of at least 6 cm along the second edge face,
- an emerging electrical supply zone, prolonging the diode zone and extending in the direction of the second edge face and emerging from the other edge face, comprising a supply zone, "internal zone", with the electrical tracks, between the faces F2 and F3, defined by a width Wt which is less than L0, which internal zone is prolonged by a supply zone beyond the other edge face, "protruding zone",
and the bent laminated glazing comprises an adhesive leaktight to liquid water (81), positioned between the rear face and the face F3 in a region of the rear face, of submillimetric thickness E8,
**characterized in that** the total width Wt is at least 5 cm, the emerging zone is divided into a plurality of "track" strips carrying electrical tracks, with an individual width Wi of less than 5 cm in the internal zone, emerging strips of the other edge face,
and **in that**, in the internal zone, the lamination interlayer is present in the space, "interstrip space", between neighboring track strips.

3. The vehicle glazing as claimed in either of the preceding claims, **characterized in that** the "interstrip" space (351, 352) between two neighboring track strips (341 to 344) has a width W_{S} of at least 5 mm and even of at most 20 cm.

4. The vehicle glazing as claimed in one of the preceding claims, **characterized in that** the track strips (341 to 344) are prolonged in the protruding zone, in particular with the same width Wi, and are connected over a width D of at least 0.5 cm and preferably redeployed as strips as far as a terminal part of the diode carrier (3).

5. The vehicle glazing as claimed in one of the preceding claims, **characterized in that** the edge face of the diode zone (30) defines arc-shaped "linking" zones (350) between neighboring track strips (341 to 344) or else which exhibits a beveled edge or a groove.

6. The vehicle glazing as claimed in one of the preceding claims, **characterized in that** said adhesive leaktight to liquid water (81) is a double-sided adhesive tape common to the track strips (341 to 344) or which forms an assembly of individual double-sided adhesive tapes (811 to 813), spaced out from one another, each track strip having an individual adhesive tape.

7. The vehicle glazing as claimed in one of the preceding claims, **characterized in that** the front face (32) comprises one or more double-sided adhesive tapes (821, 822), "alignment tape(s)", offset from the diodes (4) and even preferably offset from said adhesive leaktight to liquid water (81, 811 to 813), with a submillimetric thickness T'8, and in contact with the lamination interlayer (3).

8. The vehicle glazing as claimed in one of the preceding claims, **characterized in that**, in the protruding zone, the carrier for the diodes (3) is curved with a terminal part in a zone at the periphery of the face F4 (14), adhesively bonded with a double-sided adhesive tape, "external tape" (83, 831 to 833), the external tape, as one or more tapes, is on the front face (32) of the carrier for the diodes for the glazing having an internal luminous zone or the external tape is on the rear face (31) of the carrier for the diodes for the glazing having external signaling and **in that** preferably, for the glazing having an internal luminous zone, the zone of the rear face (31) for the adhesive bonding of a metal frame (9) is at least partly facing the zone of the external tape (83) on the front face (32) or, for the glazing having external signaling, the zone of the front face (32) for the adhesive bonding of a metal frame (9) is at least partly facing the zone of the external tape on the front face.

9. The vehicle glazing as claimed in one of the preceding claims, **characterized in that**, in the diode zone (30) and/or in the internal zone, the carrier for the diodes comprises, on the front face, another or other electronic components (5) of submillimetric thickness E5 chosen from one at least of the following elements: a resistive element, a capacitive element, a transistor or a microcontroller.

10. The vehicle glazing as claimed in one of the preceding claims, **characterized in that**, for the glazing having an internal luminous zone, the distance H between the emitting face of the diodes (4) and the face F3 is preferably nonzero and preferably of at most 0.5 mm and even ranging from 0.1 to 0.3 mm or **in that**, for the glazing having external luminous signaling, the distance H between the emitting face of the diodes and the face F2 is preferably nonzero and preferably of at most 0.5 mm and even ranging from 0.1 to 0.3 mm.

11. The vehicle glazing as claimed in any one of the preceding claims, **characterized in that** the track strips (811 to 813) are masked from the inside by a masking layer (6'), preferably on the face F4 or F3, and/or from the outside by a masking layer (6), preferably on the face F2, preferably made of enamel.

12. The vehicle glazing as claimed in one of the preceding claims, **characterized in that**, for the glazing having an internal luminous zone, the diode zone (30) is facing a gap (61) of a masking layer (6), preferably made of enamel, preferably on the face F4 or F3, which gap is common to the diodes or made of several individual gaps for the diodes, or **in that**, for the glazing having external luminous signaling, the diode zone is facing a gap of a masking layer, preferably on the face F2, preferably made of enamel, which gap is common to the diodes or made of several individual gaps for the diodes.

13. The vehicle glazing as claimed in any one of the preceding claims, **characterized in that** the lamination interlayer (2) is made of poly(vinyl butyral) (PVB), in particular with a thickness E2 of at most 0.9 mm, the diodes (4) have a thickness E4 which is less than E2, preferably of at most 0.8 mm, and even the carrier for the diodes has a thickness E3 of at most 0.2 mm.

14. The vehicle glazing as claimed in one of the preceding claims, **characterized in that** the lamination interlayer (2) is made of poly(vinyl butyral) (PVB), which is optionally acoustic and/or wedge-shaped, in particular for a windshield, or else a PVB/functional transparent plastic film/PVB composite element, the functional plastic film, preferably a PET, preferably carrying a functional layer, in particular an electrically conductive functional layer.

15. A vehicle comprising at least one vehicle glazing as claimed in any one of the preceding claims, **characterized in that**, the glazing having an internal luminous zone forming a windshield, the light from the diodes is an anticollision means, or the external luminous signaling glazing forming the rear window is a glazing including a stop lamp, a third stop lamp, or the external luminous signaling glazing forming a side window is a glazing including a hazard warning lamp or a lamp for locating the vehicle or a turn signal indicator.
